(19)

Europäisches
Patentamt
European
Patent Office
Office européen
des brevets

(11) **EP 2 177 975 A1**

(12) **EUROPEAN PATENT APPLICATION**
published in accordance with Art. 153(4) EPC

(43) Date of publication:
**21.04.2010 Bulletin 2010/16**

(21) Application number: **08777690.2**

(22) Date of filing: **23.06.2008**

(51) Int Cl.:
**G06F 3/042** *(2006.01)*    **G06F 3/041** *(2006.01)*
**H04N 1/00** *(2006.01)*    **H04N 1/04** *(2006.01)*

(86) International application number:
**PCT/JP2008/061784**

(87) International publication number:
**WO 2008/156222 (24.12.2008 Gazette 2008/52)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **21.06.2007 JP 2007163973**

(71) Applicant: **YOSHIDA, Kenji
Bunkyo-ku
Tokyo 112-0002 (JP)**

(72) Inventor: **YOSHIDA, Kenji
Bunkyo-ku
Tokyo 112-0002 (JP)**

(74) Representative: **Dunleavy, Kevin James
Knoble & Yoshida LLC
p/o De Vries & Metman
Overschiestraat 180
1062 XK  Amsterdam (NL)**

(54)    **CARD SURFACE READING/INSTRUCTION EXECUTING METHOD**

(57)    Both an information output device (a stage chassis) having a touch panel and other dot pattern reading devices can use a card, and one card can provide two types of information. To provide a card with such excellent convenience and flexibility, a technique to read a card surface and a technique to execute an instruction corresponding to the read card surface are realized. On the front surface and the back surface of the card, dot patterns are formed. The dot pattern is made into a pattern with an application ID which specifies an application related to each surface, a card surface number which specifies a card surface, and XY coordinates. With this, a method for reading a card surface and executing an instruction, which can execute different applications related to the front and back surfaces of the card is provided.

FIG.1

EP 2 177 975 A1

**Description**

**FIELD OF THE INVENTION**

The present invention relates to a technique for reading a card surface and a technique for executing an instruction corresponding to the read card surface, for the card usable to both an information output device and a pen-type scanner that have coordinate recognition means.

**BACKGROUND OF THE INVENTION**

The inventor of the present invention has proposed an information output device having coordinate recognition means (a touch panel) (for example, refer to Japanese Patent Application No. 2006-239593). This information output device is a completely new interface, featuring displaying of information such as an image or a motion picture or executing a program by recognizing a location of a finger or a pen on a card when the finger or the pen touched the card placed on a panel.

Japanese Patent Application No. 2006-239593 proposes a card whose back surface is printed with a dot pattern and front surface is printed with a drawing pattern such as an icon.

**SUMMARY OF THE INVENTION**

However, such a card can be used only with the information output device of the above-mentioned invention, and cannot be used with other dot pattern reading devices at places where the information output device is not equipped, raising a problem of lack convenience. Moreover, in principle, one card can be used only for one purpose, raising a problem of lack of flexibility.

The present invention is carried out in consideration to such points. The present invention's technical objective is to realize a technique for reading a card surface and a technique for executing an instruction corresponding to the read card surface, to provide a card with excellent convenience and flexibility which can be used both with other dot pattern reading device and the information output device (touch panel chassis) having a touch panel, and further, can provide two types of information.

To solve the above-mentioned problems, the present invention employed the following means.

That is, a first aspect of the present invention is a method for reading a card surface and executing an instruction, wherein, dot patterns are formed on a front surface and a back surface of a card, and different applications each allocated to the front and back surfaces of the card can be executed, wherein, each of the dot patterns on the front surface and the back surface of the card is made into a pattern with an application ID which specifies the application allocated to the relevant surface, a card surface number which specifies a card surface, and XY coordinates (dot coordinates; for example, card coordinates with a lower left corner as origin), and a stage chassis comprises: an optical reading unit mounted inside the chassis as a first optical reading unit for imaging the dot pattern on the back surface of the card from underneath a stage surface (inside the chassis) in a condition in which the card is placed on the stage surface provided on top of the stage chassis; a touch panel unit for detecting a touch position by a fingertip or the like on the stage surface; a storage unit for storing a correspondence table for relating each of the application IDs of the front and back surfaces of the card with the card surface number, a mask table for relating each of the card surface number with a mask number allocated for each predetermined region on XY coordinates, an instruction table for relating the mask number with an instruction, and an application program; and a control unit for controlling the first optical reading unit inside the chassis, the touch panel unit, and the storage unit, wherein, when the first optical reading unit captures an image of the dot pattern on the back surface of the card, the control unit of the stage chassis executes a process which comprises: a step for calculating a location and an orientation (an angle) of the card on the stage surface from XY coordinates of the dot pattern on the back surface of the card (dot coordinates; card coordinates) obtained from the captured image; a step for referring to the correspondence table based on an application ID and a card surface number of the back surface of the card obtained from the dot pattern on the back surface of the card, and retrieving an application ID and a card surface number of the front surface of the card; a step for detecting a touch position touched by a fingertip or the like on touch panel coordinates obtained from the touch panel unit and converting the touch panel coordinates of the touch position into XY coordinates (card coordinates) obtained from the previous step; a step for retrieving a mask number of the front surface of the card corresponding to the XY coordinates (card coordinates) specified by the touch by the fingertip or the like from a mask table; and a step for referring to an instruction table based on the mask number of the front surface of the card and executing an instruction of an application allocated for the front surface of the card, wherein, a second optical reading unit comprises: an optical reading unit; a storage unit, inside or outside a body of the second optical reading unit, the storage unit storing a correspondence table for relating an application ID on the front surface of the card with a card surface number, a mask table for relating a mask number on XY coordinates with each of the card surface number, an instruction table for relating the mask number with an instruction, and an application program; and a reading unit control unit for controlling the second optical reading unit and the storage unit, wherein, when the second optical reading unit captures an image of a dot pattern on the front surface of the card, the reading unit control unit executes a process comprising: a step for specifying an application program based on an application ID obtained from the captured image; a step for referring to a mask table based on XY coordinates of the captured image and specifying a mask number allocated for each predetermined region; and a step for referring to an instruction table based on the mask number and executing an instruction of an application allocated for the front surface of the card.

A second aspect of the present invention is the method for reading a card surface and executing an instruction, according to the first aspect, wherein, each of the dot patterns on the front surface and the back surface of the card is made into a pattern with an application ID which specifies an application allocated for the relevant surface, a card surface number which specifies a card surface, XY coordinates (dot coordinates = card coordinates), and a mask number allocated for each predetermined region, wherein, when the reading unit control unit of the second optical reading unit captures an image of the dot pattern on the front surface of the card, the reading unit control unit executes a process comprising: a step for specifying an application program based on an application ID obtained from the captured image; and a step for directly referring to an instruction table based on the mask number read out from the dot pattern and executing an instruction.

A third aspect of the present invention is a method for reading a card surface and executing an instruction, wherein, dot patterns are formed on a front surface and a back surface of a card, and different applications each allocated to the front and back surfaces of the card can be executed, wherein, each of the dot patterns on the front surface and the back surface of the card is made into a pattern with an application ID which is allocated to the relevant surface and specifies an application of the other surface by inverting at least any one of bits or flags, a card number which specifies a card, and XY coordinates (dot coordinates = card coordinates), and a stage chassis comprises: an optical reading unit mounted inside the chassis as a first optical reading unit for imaging the dot pattern on the back surface of the card from underneath a stage surface (inside the chassis) in a condition in which the card is placed on the stage surface provided on top of the stage chassis; a touch panel unit for detecting a touch position by a finger or the like on the stage surface; a storage unit for storing a mask table for relating each of the card number of the application ID with a mask number allocated for each predetermined region on XY coordinates, an instruction table for relating the mask number with an instruction, and an application program; a control unit for controlling the first optical reading unit inside the chassis, the touch panel unit, and the storage unit, wherein, when the first optical reading unit captures an image of the dot pattern on the back surface of the card, the control unit of the stage chassis executes a process which comprises: a step for calculating a location and an orientation (an angle) of the card on the stage surface from XY coordinates of the dot pattern on the back surface of the card (dot coordinates = card coordinates) obtained from the captured image; a step for specifying an application on the other side of the card by inverting at least any one of bits or flags of the application ID on the back surface of the card obtained from the dot pattern of the back surface of the card; a step for detecting a touch position touched by a fingertip or the like on a touch panel coordinates obtained from the touch panel unit and converting the touch panel coordinates of the touch position into XY coordinates (dot coordinates = card coordinates) obtained from the previous step; a step for retrieving a mask number of the front surface of the card corresponding to the XY coordinates (dot coordinates = card coordinates) specified by the touch by the fingertip or the like from a mask table; and a step for referring to an instruction table based on the mask number of the front surface of the card and executing an instruction of an application allocated for the front surface of the card, wherein, a second optical reading unit comprises: an optical reading unit; a storage unit, inside or outside the second optical reading unit, the storage unit storing a mask table for relating each application ID on the front surface of the card with a mask number allocated for each predetermined region on XY coordinates, an instruction table for relating the mask number with an instruction, and an application program; and a reading unit control unit for controlling the second optical reading unit and the storage unit, wherein, when the second optical reading unit captures an image of a dot pattern on the front surface of the card, the reading unit control unit executes a process comprising: a step for specifying an application program based on an application ID obtained from the captured image; a step for referring to a mask table based on XY coordinates of the captured image and specifying a mask number allocated for each predetermined region; and a step for referring to an instruction table based on the mask number and executing an instruction of an application allocated for the front surface of the card.

A fourth aspect of the present invention is the method for reading a card surface and executing an instruction, according to the third aspect, wherein, each of the dot patterns on the front surface and the back surface of the card is made into a pattern with an application ID which specifies an application allocated to the relevant surface, a card number which specifies a card or a card surface number which specifies a card surface, XY coordinates (dot coordinates = card coordinates), and a mask number allocated to each predetermined region, wherein, when the control unit of the second optical reading unit captures an image of the dot pattern on the front surface of the card, the control unit executes a process comprising: a step for specifying an application program based on an application ID obtained from the captured image; and a step for directly referring to an instruction table based on the mask number read out from the dot pattern and executing an instruction.

A fifth aspect of the present invention is a method for reading a card surface and executing an instruction, wherein, dot patterns are formed on a front surface and a back surface of the card, and different applications each allocated to the front and back surfaces of the card can be executed, wherein, each of the dot patterns on the front surface and the back surface of the card is made into a pattern with XY coordinates (dot coordinates), and a stage chassis comprises: an optical reading unit mounted inside the chassis as a first optical reading unit for imaging the dot pattern on the back surface of the card from underneath a stage surface (inside the chassis) in a condition in which the card is placed on the stage surface provided on top of the stage chassis; a touch panel unit for detecting a touch position by a fingertip or the like on the stage surface; a storage unit for storing a correspondence table for relating respective smallest value and greatest value of XY coordinates of the front and back surfaces of the card, an application ID of the front and back surfaces of the card, and the card surface number the front and back surfaces of the card, a mask table for relating each of the card surface number with a mask number allocated for each predetermined region on XY coordinates, an instruction table for relating the mask number with an instruction, and an application program; and a control unit for controlling the first optical reading unit, the touch panel unit, and the storage unit, wherein, when the first optical reading unit captures an image of the dot pattern on the back surface of the card, the control unit of the stage chassis executes a process which comprises: a step for calculating a location and an orientation (an angle) of the card on the stage surface from XY coordinates of the dot pattern on the back surface of the card (dot coordinates) obtained from the captured image; a step for referring to the correspondence table based on the XY coordinates of the back surface of the card obtained from the dot pattern on the back surface of the card, and retrieving an application ID and a card surface number of the front surface of the card; a step for detecting a touch position touched by a fingertip or the like on touch panel coordinates obtained from the touch panel unit and converting the touch panel coordinates of the touch position into X'Y' coordinates of card coordinates having a lower left corner as an origin by deleting the smallest value of the XY coordinates from the XY coordinates (dot coordinates) obtained from the previous step; a step for retrieving a mask number of the front surface of the card corresponding to the X'Y' coordinates (card coordinates having the lower left corner as the origin) specified by the touch by the fingertip or the like from a mask table; and a step for referring to an instruction table based on the mask number of the front surface of the card and executing an instruction of an application allocated for the front surface of the card, wherein, a second optical reading unit comprises: an optical reading unit; a storage unit, inside or outside a body of the second optical reading unit, the storage unit storing a correspondence table for relating a largest value and a smallest value of XY coordinates on the front surface of the card, an application ID, and a card surface number, a mask table for relating a mask number allocated to each predetermined region on XY coordinates with each card surface number, an instruction table for relating the mask number with an instruction, and an application program; and a reading unit control unit for controlling the second optical reading unit and the storage unit, wherein, when the second optical reading unit captures an image of a dot pattern on the front surface of the card, the reading unit control unit executes a process comprising: a step for referring to the correspondence table based on XY coordinates obtained from the captured image and specifying an application ID and an application program; a step for deleting the smallest value of the XY coordinates from the XY coordinates of the captured image, referring to a mask table which is specified by the card surface number based on the X'Y' coordinates in card coordinates having the lower left corner as an origin, and specifying a mask number; and a step for referring to an instruction table based on the mask number and executing an instruction.

A sixth aspect of the present invention is the method for reading a card surface and executing an instruction, according to any one of the first to fifth aspects, wherein, when the control unit controlling the first optical reading unit, the touch panel unit, and the storage unit, or the second optical reading unit detects, for an application ID or a card surface number obtained from a dot pattern on the front surface or the back surface of the card, that an application program corresponding to the application ID or tables required to execute the application program do not exist in the control unit or inside or outside a body of the second optical reading unit, the control unit or the second optical reading unit downloads the application program or the tables from a server connected through a network.

A seventh aspect of the present invention is a card medium, front and back surfaces of which are superimposed and printed with a first dot pattern and a second dot pattern, respectively, with drawing patterns, wherein, the first dot pattern is a large dot pattern which is made into a pattern with an application ID which specifies an application allocated for the drawing pattern on the other surface and a card surface number which specifies a card surface, and, by capturing an image of the back surface of the card by a first optical reading unit from inside a chassis, an application ID and a card surface number of the front surface of the card is read out from a dot pattern on the back surface of the card, and a process which is related to the application ID and the card surface number and corresponds to the drawing pattern on the front surface of the card is executed, wherein, the second dot pattern is a small dot pattern which is made into a pattern with an application ID which specifies an application allocated for each drawing pattern and a card surface number which specifies a card surface, and, by reading the front surface of the card by a second optical reading unit, an application ID and a card surface number allocated for the drawing pattern of the front surface of the card are read out from the dot pattern of the front surface of the card, and a process which is related to the application ID and the card surface number and corresponds to the drawing pattern of the front surface of the card is executed.

An eighth aspect of the present invention is a stage chassis having the first optical reading unit for capturing an image of a whole back surface of the card medium of the seventh aspect, the stage chassis comprising: a touch panel unit for detecting a touch position by a fingertip or the like on a stage surface; a storage unit for storing a correspondence table for relating each application ID of the front and back surfaces of the card with a card surface number, a mask table for relating each of the card surface number with a mask number allocated for each predetermined region on XY coordinates, an instruction table for relating the mask number with an instruction, and an application program; a control unit for controlling the first optical reading unit, the touch panel unit, and the storage unit, wherein, the control unit of the stage chassis executes a process comprising: a step for calculating a position and an orientation of the card from a captured image of the whole back surface of the card medium on the stage surface imaged by the first optical reading unit; a step for referring to the correspondence table based on an application ID and a card surface number of the back surface of the card obtained from a first dot pattern (a large dot pattern) of the back surface of the card and reading out an application ID and a card surface number of the front surface of the card; a step for detecting a touch position by a fingertip or the like on touch panel coordinates obtained from the touch panel unit and converting the touch panel coordinates of the touch position into XY coordinates (card coordinates) obtained in the previous step; a step for reading a mask number of the front surface of the card corresponding to the XY coordinates (card coordinates) specified by the touch by the fingertip or the like from the mask table; and a step for referring to the instruction table based on the mask number of the front surface of the card and executing an instruction of an application allocated for the front surface of the card.

A ninth aspect of the present invention is the stage chassis according to the eighth aspect, wherein, the first optical reading unit recognizes only the first dot pattern (a large dot pattern) while capturing an image of the whole back surface of the stage.

A tenth aspect of the present invention is the stage chassis according to the eighth aspect, wherein, the control unit extracts only the first large dot pattern from the captured image obtained from the first optical reading unit and converts into a code value corresponding to the dot pattern.

An eleventh aspect of the present invention is the method for reading a card surface and executing an instruction, wherein, each of the second dot patterns (small dot patterns) of the front surface and the back surface of the card medium of the seventh aspect is made into a pattern with an application ID which specifies an application allocated for each surface, a card surface number which specifies a card surface, and a mask number allocated for each predetermined region, wherein, when the reading unit control unit of the second optical reading unit captures an image of a dot pattern on the front surface of the card, the reading unit control unit executes a process comprising: a step for specifying an application program based on an application ID obtained from the captured image; and a step for directly referring to an instruction table based on the mask number read out from the dot pattern and executing an instruction.

A twelfth aspect of the present invention is the method for reading a card surface and executing an instruction, wherein each of the second dot patterns (small dot patterns) of the front surface and the back surface of the card medium of the seventh aspect is made into a pattern with an application ID which specifies an application allocated for each surface, a card surface number which specifies a card surface, XY coordinates (dot coordinates = card coordinates), and a mask number allocated for each predetermined region, wherein, when the reading unit control unit of the second optical reading unit captures an image of a dot pattern of the front surface of the card, the reading unit control unit executes a process comprising: a step for specifying an application program based on an application ID obtained from the captured image; and a step for directly referring to an instruction table based on the mask number read out from the dot pattern and executing an instruction.

A thirteenth aspect of the present invention is the method for reading a card surface and executing an instruction, wherein each of the second dot patterns (small dot patterns) of the front surface and the back surface of the card medium of the seventh aspect is made into a pattern with an application ID which specifies an application allocated for each surface, a card surface number which specifies a card surface, and XY coordinates (dot coordinates = card coordinates), wherein, when the reading unit control unit of the second optical reading unit captures an image of a dot pattern of the front surface of the card, the reading unit control unit executes a process comprising: a step for specifying an application program based on an application ID obtained from the captured image; a step for referring to the mask table and specifying a mask number allocated for each predetermined region; and a step for referring an instruction table based on the mask number and executing an instruction.

A fourteenth aspect of the present invention is the method for reading a card surface and executing an instruction, wherein each of the second dot patterns (small dot patterns) of the front surface and the back surface of the card medium of the seventh aspect is made into a pattern with XY coordinates (dot coordinates), wherein, when the reading unit control unit of the second optical reading unit captures an image of a dot pattern of the front surface of the card, the reading unit control unit executes a process comprising: a step for referring to the correspondence table based on the XY coordinates obtained from the captured image and specifying an application ID and an application program; a step for deleting a smallest value of the XY coordinates from XY coordinates of the captured image to obtain X'Y' coordinates of the card coordinates having a lower left corner as an origin and referring to a mask table specified by the card surface number based on the X'Y' coordinates and specifying a mask number allocated for each predetermined region; and a step for referring to an instruction table based on the mask number and executing an instruction.

According to the present invention, a card with excellent convenience and flexibility can be provided; the card can be used with both the touch panel chassis and other dot pattern reading device, and further, one piece of the card can provide two types of information.

## BRIEF DESCRIPTION OF THE DRAWINGS

Figure 1 is a diagram illustrating an example of a card used in the present invention.

Figure 2 is an explanatory diagram showing a use state of a touch panel chassis as an embodiment of the present invention.

Figure 3 is a diagram (1) illustrating a touch panel structure.

Figures 4A and 4B are diagrams (2) illustrating a touch panel structure.

Figure 5 is a hardware block diagram showing a touch panel system.

Figure 6 is an explanatory diagram showing a use state in which a card of the present invention is used using a pen-shaped scanner.

Figure 7 is an explanatory diagram showing an example of a dot pattern of GRID1.

Figures 8A and 8B are enlarged diagrams showing an example of information dots of a dot pattern in GRID 1.

Figures 9A and 9B are explanatory diagrams showing arrangements of information dots in GRID1.

Figure 10 is an example of information dots in GRID1 and bit expressions of the data defined therein, which shows another embodiment.

Figures 11A to 11C are information dots in GRID1 and bit expressions of the data defined therein. Two dots are arranged in Figure 11A; four dots are arranged in Figure 11B; and five dots are arranged in Figure 11C.

Figures 12A to 12D show modification examples of a dot pattern in GRID1. Figure 12A is a schematic diagram of six information dot arrangement; Figure 12B is a schematic diagram of nine information dot arrangement; Figure 12C is a schematic diagram of 12 dot arrangement; and Figure 12D is a schematic diagram of 36 dot arrangement.

Figures 13A and 13B are explanatory diagrams showing dot patterns of direction dots.

Figures 14A and 14B are explanatory diagrams showing a dot pattern format in the first embodiment and each information dot arrangement.

Figure 15 is a diagram showing a front and back surface correspondence table.

Figure 16 is a diagram showing an application ID-card surface number-mask pattern number correspondence table.

Figure 17 is a diagram showing a mask pattern number-coordinate value-mask number correspondence table.

Figure 18 is a diagram showing a coordinate value-mask number correspondence table.

Figure 19 is a diagram showing a mask number-address-instruction correspondence table.

Figures 20A and 20B are explanatory diagrams showing a method for calculating a position of a fingertip touched by a user.

Figures 21A and 21B are a card in the illustrative example of the first embodiment.

Figure 22 is a diagram showing a table in the illustrative example of the first embodiment.

Figure 23 is a diagram showing a mask pattern number-coordinate value-mask number correspondence table in the illustrative example of the first embodiment.

Figures 24A and 24B are explanatory diagrams showing dot pattern formats in the second embodiment.

Figure 25 is a diagram showing a mask number-address-instruction correspondence table.

Figures 26A and 26B are explanatory diagrams showing dot pattern formats in the third embodiment.

Figure 27 is an explanatory diagram showing an illustrative example of code values in each card area in a dot code shown in Figure 26A.

Figures 28A and 28B are diagrams for illustrating a method for reading codes when the back side of the card is read by the touch panel chassis.

Figure 29 is an explanatory diagram showing a dot pattern format in the fourth embodiment.

Figure 30 is a diagram for illustrating an illustrative example of coordinate values.

Figure 31 is a diagram showing a front and back surface correspondence table.

Figures 32A and 32B are explanatory diagrams showing a method for calculating a position of a fingertip touched by a user.

Figures 33A and 33B are diagrams for illustrating a GAM as the fifth embodiment.

Figure 34 is a perspective diagram showing a touch panel chassis according to the sixth embodiment.

Figures 35A and 35B are diagrams illustrating arrangements of a card, IRLEDs, and a touch panel.

Figures 36A and 36B are explanatory diagrams showing a card of the sixth embodiment and dots printed on the card.

Figure 37 is an explanatory diagram showing another example of a card according to the sixth embodiment.

Figure 38 is an explanatory diagram showing an arrangement of information dots of a dot pattern in the sixth embodiment.

Figure 39 is an explanatory diagram showing a dot pattern format in the sixth embodiment.

Figures 40A and 40B are explanatory diagrams of a dot pattern defining a direction of a block by changing the way of arranging information dots in dot patterns shown in Figures 7 to 12D.

Figures 41A and 41B are explanatory diagrams of a dot pattern defining a direction of a block by changing the way of arranging information dots in dot patterns shown in Figures 7 to 12D and show arrangements if information dots.

Figures 42A and 42B are explanatory diagrams showing a method for calculating a position of a fingertip touched by a user.

Figure 43 is a diagram for illustrating characteristics of two types of dots.

Figure 44 is an explanatory diagram showing a use state when a card of the present invention is used with a portable game machine.

Description of Numerals and Signs

DOT PATTERN

KEY DOT

INFORMATION DOT

REFERENCE GRID POINT DOT

VIRTUAL GRID POINT

34a, 34b, 34c            GRID REGION

48a, 48b, 48c, 48d, 48e    REFERENCE DOT

48f, 48g, 48h            VIRTUAL REFERENCE POINT

CPU                Central Processing Unit

MM Main Memory

USB I/F    USB Interface

HD Hard Disc Device

DISP        Display Device (Display means)

KBD        Key Board

NW I/F    Network Interface

## DETAILED DESCRIPTION OF THE INVENTION

Embodiments of the present invention are described below by reference to the drawings.

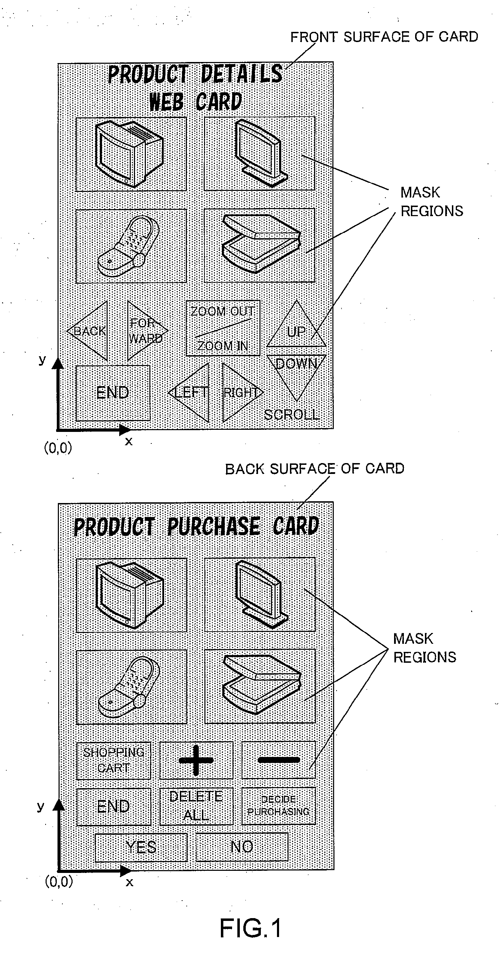

Figure 1 is a diagram illustrating a card according to the present invention. This card is a card for starting and executing a variety of applications. Both surfaces of the card are printed with mask areas on which pictures or operation instructions are drawn, and both surfaces are also printed with dot patterns throughout the surfaces. Application content described on the card is different between the front and back surfaces, and a dot pattern corresponding to each content is printed. For example, as shown in Figure 1A, the front surface of the card functions as a card for getting a detail of a product on Web sites and, as shown in Figure 1B, the back surface of the card functions as a card for purchasing a product.

The card can be used both with a touch panel chassis (a stage chassis) having a first optical reading unit and with a pen-shaped scanner as a second optical reading unit. That is, at a place where a touch panel chassis is facilitated, such as at a shop, a user places the card on the touch panel while turning the surface on which an application desired to be started is printed upward. Then, performs a variety of operations by touching mask regions by a fingertip. At a place where the touch panel chassis is not facilitated, such as at home, a user performs a variety of operations by clicking mask regions with a pen-shaped scanner.

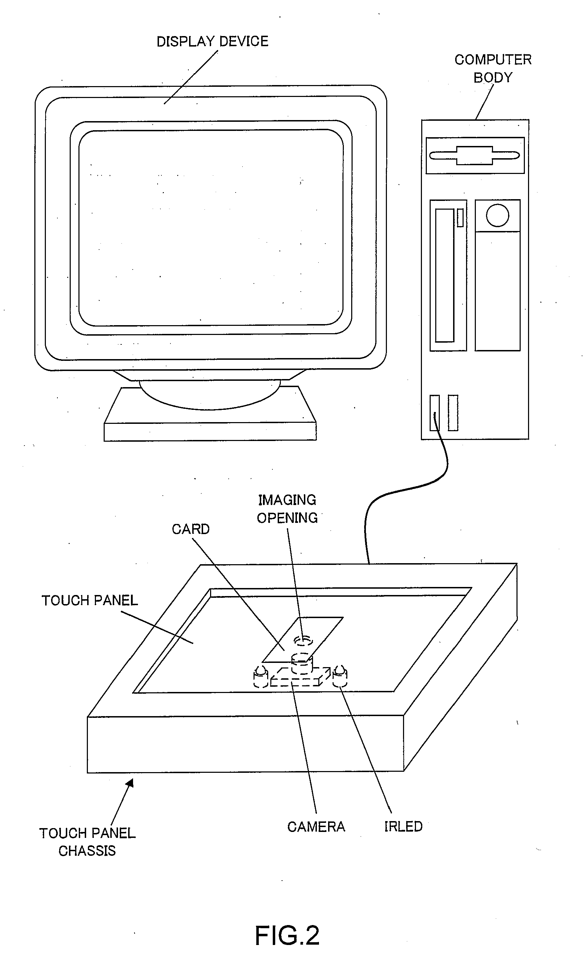

Figure 2 is a general computer system connected with the above-described touch panel chassis.

This system is composed of a computer body, a display device, and a touch panel chassis. The top surface of the touch panel chassis in this embodiment is configured as a touch panel. An imaging opening opens at the center of the top surface of the touch panel so that a camera (an optical reading unit) provided in the chassis can capture an image of a dot pattern printed on the back surface of the card placed on the top side of the imaging opening.

It should be noted that the touch panel may take other structures such as using an infrared imaging unit.

IRLEDs are disposed as illumination means around the camera in the touch panel chassis to irradiate the imaging opening. That is, the dot pattern of the back surface of the card can be imaged by the camera capturing the reflection of infrared light irradiated from the IRLEDs and reflected from the back surface of the card placed on the imaging opening.

The dot pattern of the back surface of the card, which is described later, is printed with ink which absorbs infrared rays, so that imaging of the dot pattern by the camera is not affected even if a normal print and the dot pattern are superimposed and printed.

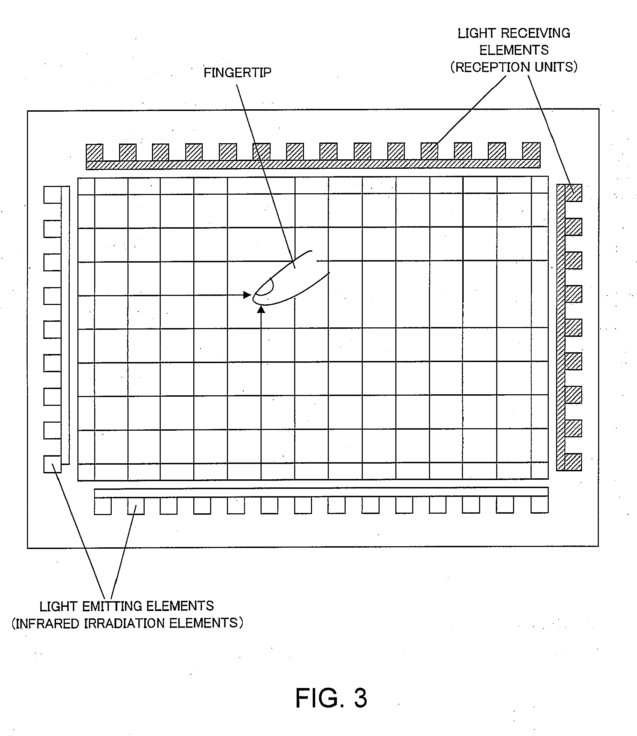

Figure 3 is a diagram illustrating a detail of the touch panel. On the side walls of the touch panel are disposed a group of light emitting elements and a group of light receiving elements in pairs. Coordinate input is enabled by blocking the light irradiated from the group of light emitting elements by a medium such as a fingertip, a touch pen, or a figure whereby the light supposed to be received is not received by the light receiving elements, as a result, the light blocking object at the position is recognized.

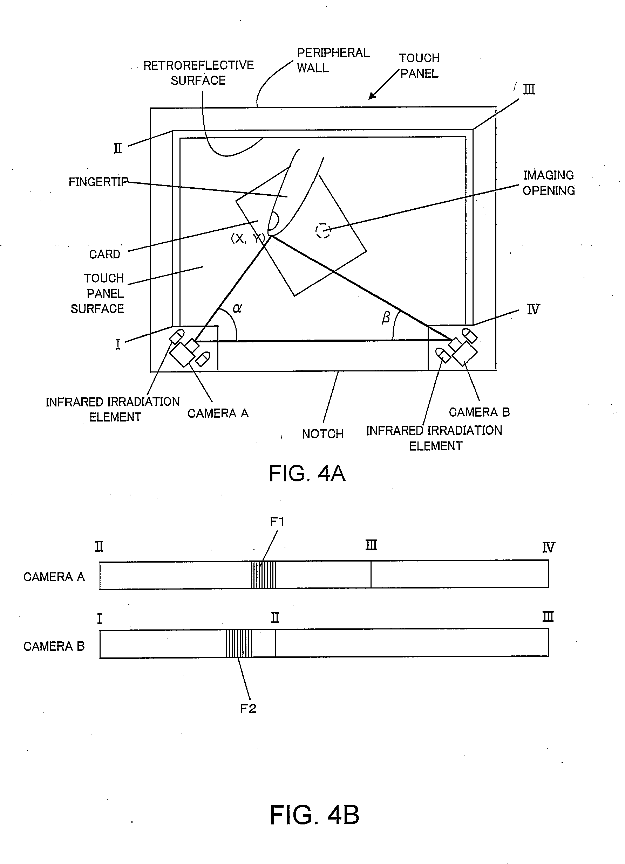

Figure 4A shows another embodiment of a touch panel (coordinate recognition means).

That is, on both inner ends of one side that constitutes a peripheral wall of the touch panel is provided a pair of infrared imaging units (camera A and camera B) which make the stage function as coordinate recognition means.

Images captured by these infrared imaging units are analyzed by a control unit to enable recognition of XY coordinates of a fingertip of a player/operator, a pen, or an object on the touch panel or the stage.

Also, the one side of the peripheral walls has a notch, and this notch can be used to easily retract a card as a medium from the stage or the touch panel.

Infrared irradiation elements are provided on both lateral sides of the cameras A and B, and the cameras capture reflection of infrared rays irradiated from the infrared irradiation elements. Each of the cameras A and B has an IR filter to enable capturing of the reflection, although not shown in the drawing.

Inner surfaces of the peripheral walls are made up of retroreflective surfaces which have a characteristic to reflect infrared rays in the same angle as the direction of the incident infrared rays.

Figure 4B shows captured images by the cameras A and B. If a fingertip of a player is located on a touch panel or a stage surface, images of the parts F1, F2 (fingertip) are captured as reflection different from other parts. Therefore, the XY coordinates of a fingertip on a touch panel or a stage surface can be calculated by analyzing images from both cameras A and B.

That is, angle $\alpha$ can be calculated by recognizing the position of F1 from the image captured by the camera A, and angle $\beta$ can be calculated by recognizing a position of F2 from the image captured by the camera B, as a result, the coordinate values (X, Y) can be calculated.

It should be noted that the position may also be recognized by detecting a difference between an image where such a fingertip does not exist on a touch panel nor a stage surface and an image with a touch by a fingertip.

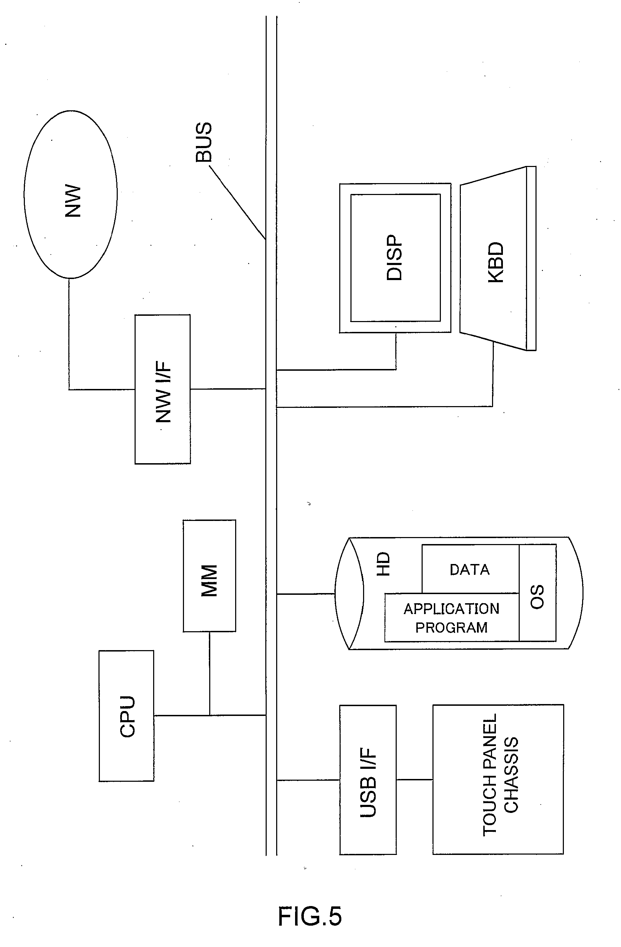

Figure 5 is a block diagram illustrating a touch panel system.

As shown in Figure 5, the personal computer has a main memory (MM), a hard disc device (HD) connected through a bus (BUS), a display device (DISP) as output means, and a key board (KBD) as input means, centering on a central processing unit (CPU).

Also, the touch panel chassis mentioned above is connected via a USB interface (USB I/F).

Although not shown in Figure 5, a printer, a speaker, and the like can be connected as output means other than the display device (DISP).

The bus (BUS) is connected to a general network (NW) such as the Internet through the network interface (NW I/F), so that electronic map data, text information, image information, sound information, motion picture information, a program, and the like can be downloaded from a server not shown in Figure 5.

In the hard disc (HD), as well as an operating system (OS), data including an application program such as a dot pattern analysis program used in this embodiment, electronic map data, text information, image information, sound information, motion picture information, a variety of tables, and the like is registered.

When the central processing unit (CPU) receives through a USB interface an input signal of a reading code or coordinate value which is converted from imaging data of the dot pattern on a medium surface captured by the imaging unit in the touch panel chassis, the central processing unit retrieves electronic map data, text information, image information, sound information, motion picture information, a program, and the like from the hard disc (HD) and outputs from an output device such as a display device (DISP) or a speaker not shown in Figure 5.

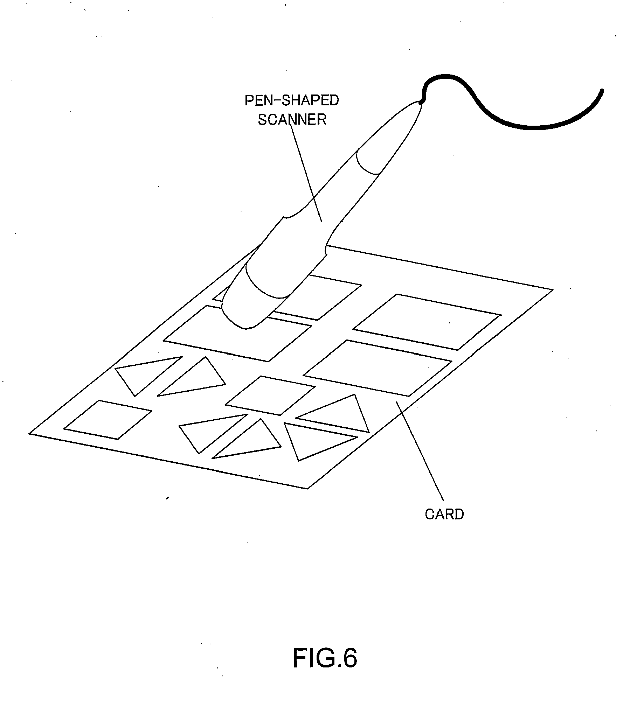

Figure 6 is an explanatory diagram showing a use state when a card according to the present invention is used using a pen-shaped scanner. When a pen-shaped scanner is used, a user clicks a mask region with the pen-shaped scanner to read out the dot pattern printed on the mask region, in order to display a product detail image or a Web site page on the display device or to perform an operation instruction such as enlarging or reducing the displayed image.

The pen-shaped scanner, although the detail of which is not shown, comprises optical imaging elements such as an infrared irradiation unit (red LED), an IR filer, a CMOS sensor, and a CCD sensor, and has a function to image reflection of irradiation light irradiated on a medium surface. Here, a dot pattern on a medium surface is printed with carbon ink, and image and text part other than the dot pattern is printed with non-carbon ink.

This carbon ink has a characteristic of absorbing infrared light. The image captured by the optical imaging element shows black only at dot part.

In this way, since only the dot pattern is printed with carbon ink, an image and a text printed with other carbon ink are not visually affected, and the dot pattern can be superimposed and printed with a normal print.

It should be noted that although carbon ink was used as an example of ink having an infrared-absorbing characteristic, printing of the dot pattern is not limited to the carbon ink as long as the ink reacts a specific wavelength.

The image of the dot pattern captured in such a way, is analyzed by the central processing unit (CPU) in the pen-shaped scanner and converted into a coordinate value or a code value, and transmitted to a personal computer through a USB cable and a USB interface (USB I/O).

The central processing unit (CPU) of the personal computer refers to the received table which indicates a coordinate value or a code value, to cause corresponding electronic map data, text information, image information, sound information, and motion picture information are output from the display device (DISP) or a speaker.

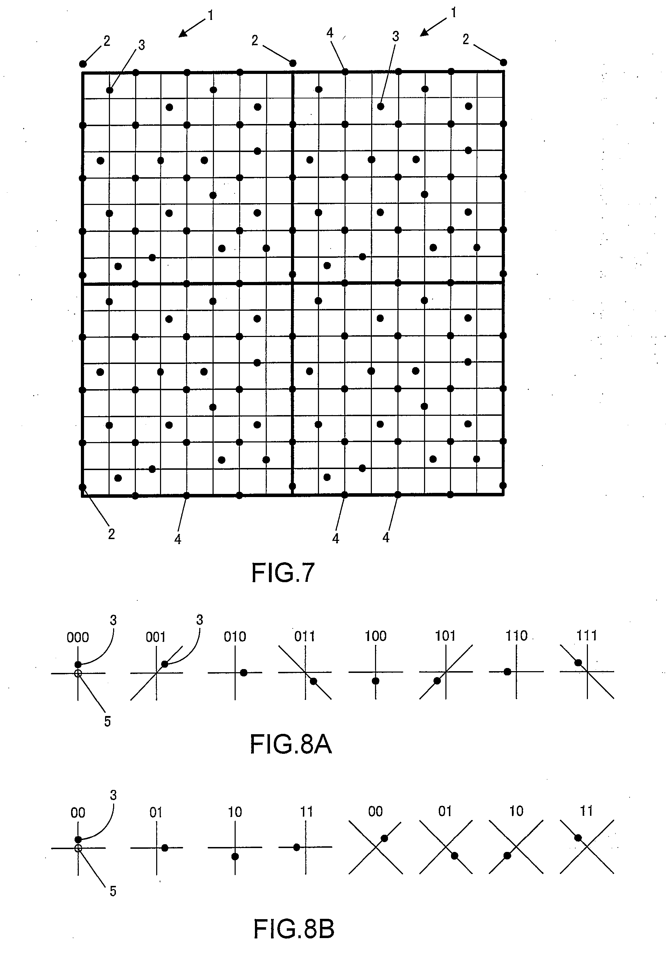

Figures 7 to 13B describe such a dot pattern.

<Description of a dot pattern; GRID1>

Figures 7 to 12D are explanatory diagrams showing GRID1 that is an example of a dot pattern of the present invention.

It should be noted that, in these diagrams, grid lines in horizontal and vertical directions are added for convenience of description, and do not exist in an actual printing surface. If a scanner as an imaging unit has an infrared irradiation means, a key dot 2, an information dot 3, a reference grid point dot 4, and the like constituting a dot pattern 1, are preferably printed with an invisible ink or a carbon ink, which absorbs the infrared light.

Figure 7 is an enlarged diagram showing an example of information dots of a dot pattern and bit expression of data defined therein. Figures 8A and 8B are explanatory diagrams showing information dots arranged with key dots located in the centers.

The information input and output method using the dot pattern of the present invention comprises means for generating a dot pattern 1, means for recognizing the dot pattern 1, and means for outputting information and a program from the dot pattern 1. That is, after retrieving a dot pattern 1 as image data with a camera, first, the method extracts a reference grid point dot 4, then, extracts a key dot 2 based on the fact that there is no dot at the location where a reference grid point dot 4 supposed to be, extracts an information dot 3, digitizes the information dot 3 to extract an information region, converts the information into numerical values, and outputs information and a program from this dot pattern 1 based on the numerical information. For example, the method outputs information such as a sound and a program from this dot pattern 1 to an information output device, a personal computer, a PDA, a mobile phone, or the like.

To generate a dot pattern 1 of the present invention, based on a dot code generation algorithm, fine dots, used for recognition of information such as a sound, including key dots 2, information dots 3, and reference grid point dots 4, are arranged in accordance with a predetermined rule. As shown in Figure 6, in a block of a dot pattern 1 which represents information, $5 \times 5$ reference grid point dots 4 are arranged with reference to a key dot 2, and an information dot 3 is arranged around a virtual grid point 5 which is at the center surrounded by the four reference grid point dots 4. Arbitrary numerical information is defined in this block. The illustrative example of Figure 6 shows a case where 4 blocks of a dot pattern 1 are arranged in parallel (in bold frame), provided, however, that the dot pattern 1 is not limited to four blocks.

One piece of information and program corresponding to a block can be output, or one piece of information and program corresponding to a plurality of blocks can be output.

When a camera retrieves this dot pattern 1 as image data, reference grid point dots 4 can calibrate a distortion of a lens of the camera, skewed imaging, expansion and contraction of a paper surface, curve of a medium surface, and distortion during printing. Specifically, a function for calibration $(Xn, Yn) = (Xn', Yn')$ is calculated for converting distorted four reference grid points 4 into the original square, then the vector of the correct information dot 3 is calculated by calibrating an information dot 3 by the same function.

If reference grid point dots 4 are arranged in a dot pattern 1, since image data of the dot pattern 1 retrieved by a camera can be calibrated its distortion attributable to the camera, image data of the dot pattern 1 can be accurately recognized even when the image data is retrieved by a popular camera with a lens of high distortion rate. Moreover, even when the dot pattern 1 is read out by a camera inclined with reference to a surface of the dot pattern 1, the dot pattern can be accurately recognized.

Key dots 2 are dots, as shown in Figure 7, arranged by shifting four reference grid point dots 4 that are located at the four corners of a block, in a certain direction. The key dot 2 is a representative point of a block of a dot pattern 1 which represents an information dot 3. For example, the key dots 2 are dots obtained by shifting reference grid point dots 4 that are located at the four corners of a block of a dot pattern 1 by 0.1 mm upward. If an information dot 3 represents X, Y coordinate values, a coordinate point is at the position obtained by shifting key dot 2 by 0.1 mm downward. However, these numbers are not limited to these, and may vary depending on the size of a block of a dot pattern 1.

Information dots 3 are dots used for recognition of a variety of information. The information dot 3 is arranged around a key dot 2 as a representative point, as well as at the ending point of a vector expressed with a starting point being a virtual grid point 5 that is at the center surrounded by four reference grid point dots 4. For example, the information dot 3 is surrounded by reference grid point dots 4 and, as shown in Figure 8A, since the dot 0.1 mm apart from the reference grid point 5 has direction and length when expressed as a vector, the information dots 3 express 3 bits by being disposed in eight directions by being rotated by 45 degrees each in clockwise direction. As a result, one block of a dot pattern 1 can express 3 bits × 16 = 48 bits.

Figure 8B is a method for defining an information dot 3 having 2 bits for each grid, in a dot pattern of Figure 7. Each grid defines information of 2 bits by shifting a dot in + direction and × direction. In this way, although 48 bits information can be defined indeed, data can be allocated to each 32 bits by dividing for an intended purpose. Maximum of 216 (approximately 65,000) patterns of dot pattern formats can be realized depending on the combination of + direction and × direction.

It should be noted that arrangement is not limited to this and may vary including a possibility of 4 bit expression by arranging dots in 16 directions.

Preferably, the dot diameter of a key dot 2, information dot 3, or reference grid point dot 4 is approximately 0.05 mm in consideration of viewing quality, printing accuracy in respect of a paper property, resolution of a camera, and optimal digitization.

Also, the gap between reference grid point dots 4 is preferably approximately 0.5 mm in both vertical and horizontal directions in consideration of information amount required for an imaging area and possible false recognition of dots 2, 3, and 4. In consideration of false recognition of reference grid point dots 4 and information dots 3, disalignment of a key dot 2 is preferably around 20% of the grid gap.

The gap between the information dot 3 and a virtual grid point that is surrounded by four reference grid point dots 4 is preferably the gap approximately 15 to 30 % of a distance between adjacent virtual grid points 5. If the distance between an information dot 3 and a virtual grid point 5 is shorter than this gap, dots are easily recognized as a big cluster, degrading the visual quality as a dot pattern 1. On the other hand, if the distance between an information dot 3 and a virtual grid point 5 is longer than this gap, the judgment as to which one of the adjacent virtual grid point 5 is the center of a vector for the information dot 3 becomes difficult.

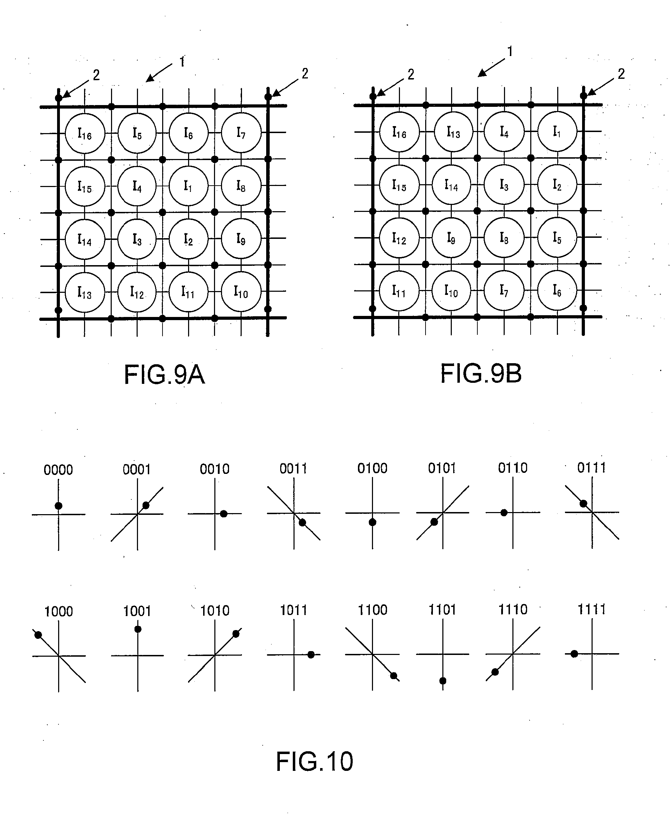

For example, as shown in Figure 9A, when the information dots 3, from I1 to I16, are arranged from the center of a block in a clockwise direction with the grid gap of 0.5 mm, the information dots 3 express 2 bits × 16 = 32 bits in 2 mm × 2 mm.

Further, a block can include sub-blocks which have independent information content and are not affected by other information content. Figure 9B illustrates such sub-blocks. The sub-blocks each composed of four information dots 3 [I1, I2, I3, I4], [I5, I6, I7, I8], [I9, I10, I11, I12], and [I13, I14, I15, I16] deploy independent data (3 bits × 4 = 12 bits) in information dots 3. In this way, having sub-blocks makes error checks easier as the error checks are to be done for each sub-block.

Vector direction (rotation direction) of information dots 3 is preferably set evenly for each 30 to 90 degrees.

Figure 10 is an example of information dots 3 and bit expression of data defined therein, showing another embodiment.

Information dots 3 can express 4 bits if two types of information dots, long and short distance ones from a virtual grid point 5 that is surrounded by reference grid point dots 4, are used, and vector directions are eight directions. Here, the long distance of the information dots 3 is preferably approximately 25 to 30 % of the distance between adjacent virtual grid points 5, and the short distance, approximately 15 to 20 %. However, the gap between the centers of the long and short distance information dots 3 is preferably longer than the diameters of these dots.

The information dot 3 surrounded by four reference grid point dots 4 is preferably one dot in consideration of visual quality. However, if the visual quality is disregarded and information amount is required to be large, one bit can be allocated to each vector and information dot 3 can be expressed by a plurality of dots thereby expressing a great amount of information. For example, with vectors of 8 concentric directions, an information dot 3 surrounded by four grid dots 4 can express 28 pieces of information, 16 information dots in one block account for 2128 pieces of information.

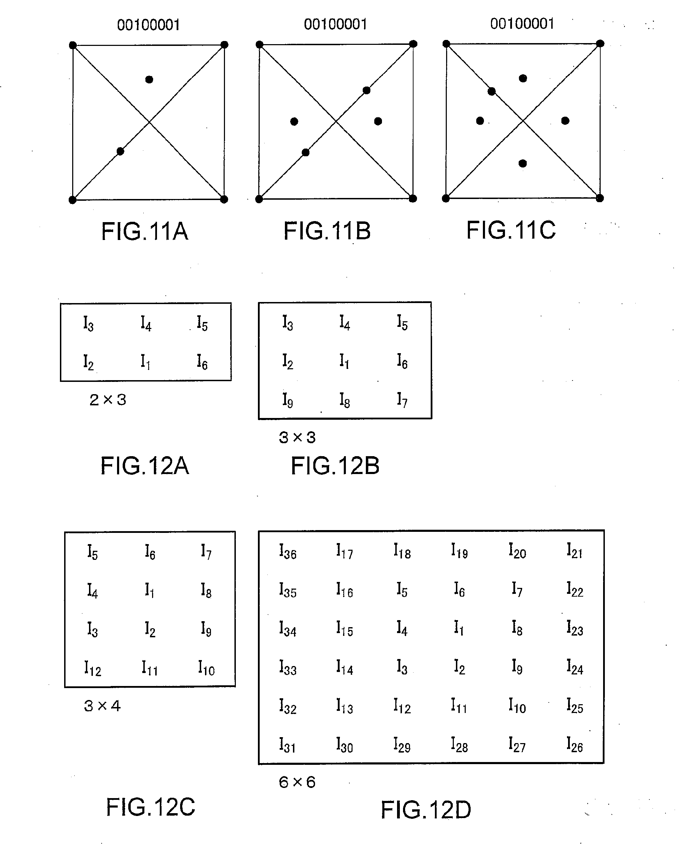

Figures 11A to 11C are examples of information dots and bit expressions of data defined therein. Figure 11A is a diagram disposing two dots; Figure 11B is a diagram disposing four dots; and Figure 11C is a diagram disposing five dots.

Figures 12A to 12D show modification examples of a dot pattern. Figure 12A is a schematic diagram of six information dot arrangement; Figure 12B is a schematic diagram of nine information dot arrangement; Figure 12C is a schematic diagram of 12 information dot arrangement; and Figure 12D is a schematic diagram of 36 information dot arrangement.

The dot patterns 1 shown in Figures 7, 9A and 9B show examples where 16 (i.e., 4 × 4) information dots 3 are arranged in one block. However, this information dot 3 is not limited to disposing of 16 dots and may vary. For example, depending on a required information size and the resolution of a camera, 6 (i.e., 2 × 3) information dots 3 may be arranged in one block (Figure 9A), 9 (i.e., 3 × 3) information dots 3 may be arranged in one block (Figure 9B), 12 (i.e., 3 × 4) information dots 3 may be arranged in one block (Figure 9C), and 36 information dots 3 may be arranged in one block (Figure 9D).

<Description of a Dot Pattern; Direction Dot>

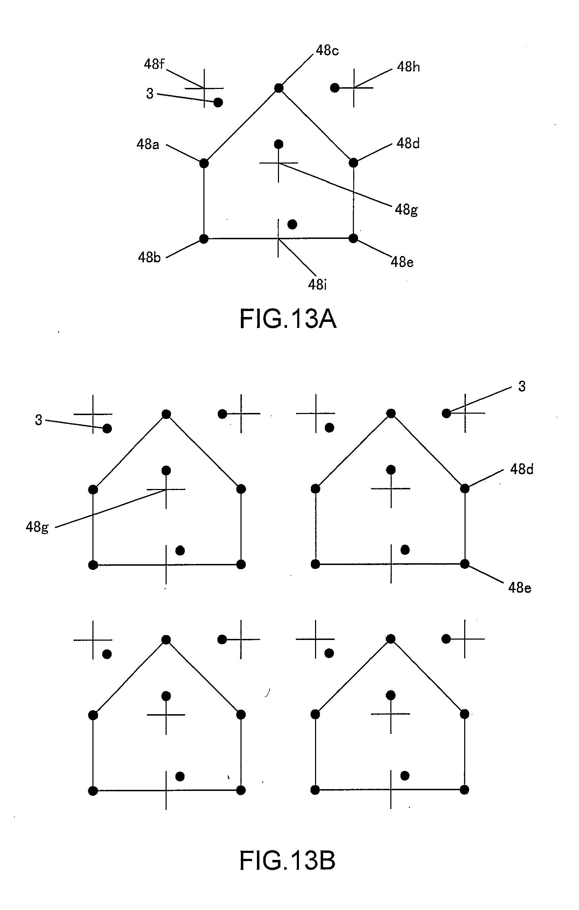

Next, another embodiment of a dot pattern, a direction dot, is described with reference to Figures 13A and 13B.
This dot pattern defines the dot pattern's direction by the shape of its block. In Figure 13A, reference points 48a to 48e are first arranged, and the line connecting these reference points 48a to 48e defines a shape indicating the direction of the block (a pentagon oriented upward in this example). Based on these reference points, virtual reference points 48f, 48g, and 48h are arranged. An information dot 3 is disposed at the ending point of a vector which has a length and a direction when having the virtual reference point as the starting point. In this way, the direction of the block can be defined by how reference points are arranged, in Figure 13A. In addition, when the direction of a block is defined, the whole size of the block is also defined.
It should be noted that although the reference points 48a to 48e and information dot 3 were described as being the same shapes in Figure 13A, reference points 48a to 48e may be larger than an information dot 3. Further, these reference points 48a to 48e may take any shapes including an triangle, a square, or other polygons, as long as they can be distinguished from information dots 3.
It should be noted that Figure 13B is a diagram where two of the block shown in Figure 13A are connected in horizontal direction and two in vertical direction.

<First Embodiment>

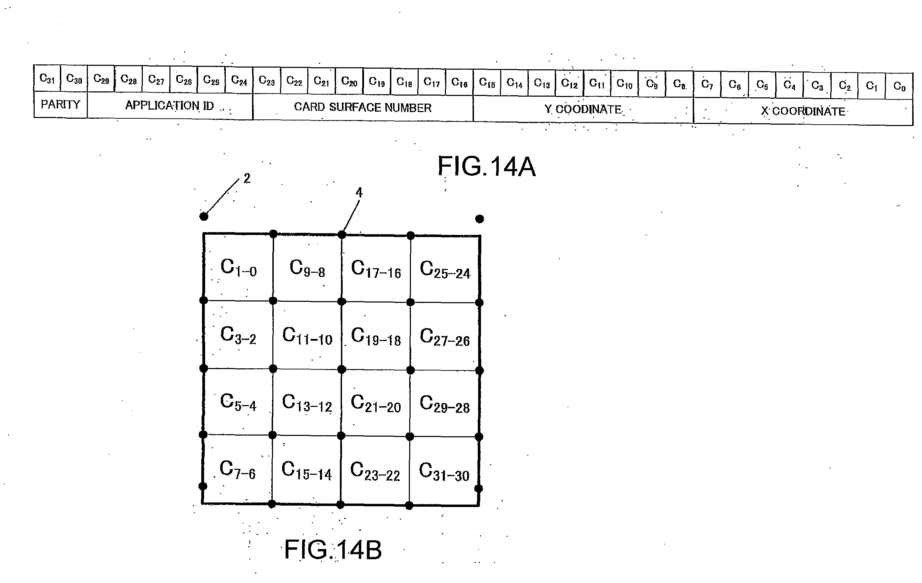

Figures 14A and 14B are diagrams showing a dot code format according to a first embodiment of the present invention.
It should be noted that although each embodiment below uses above-described GRID1 as a dot pattern, the present invention is not limited to this and other dot patterns including above-described direction dot may be used.
Each dot pattern on the front surface and the back surface of the card is made into a pattern with an application ID which specifies an application related to each surface, a card surface number which specifies a card surface, and XY coordinates (a dot coordinate: for example, a card coordinate having the lower left corner as the origin)
As shown in Figure 14B, this dot pattern is a dot pattern composed of $4 \times 4$ block regions, and these blocks are segmented into C1-0 to C31-30.
Each region's dot code format is shown in Figure 14A. C0 to C7 register X coordinate; C8 to C15 register Y coordinate; C16 to C23 register a card surface number; C24 to C29 register an application ID; and C30 to C31 register parity.
In this way, this dot pattern can register X coordinate, Y coordinate, and corresponding code information in $4 \times 4$ grid regions.

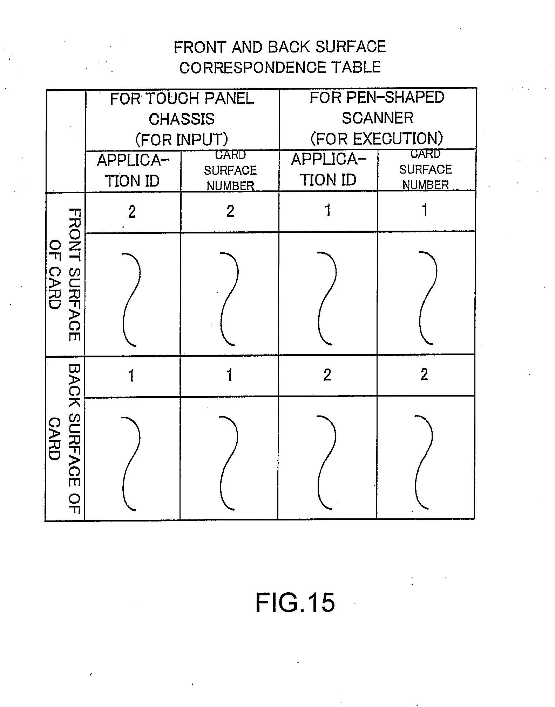

Figure 15 is a diagram illustrating a front and back surface correspondence table used in this embodiment.
The table is stored in a hard disc device. As shown in Figure 15, the front and back surfaces of a card are related with application IDs and card surface numbers for the touch panel chassis (for input) and for the pen-shaped scanner (for execution) in the table.
When a user places a card above the imaging opening of the touch panel, the camera in the touch panel chassis reads out a dot pattern superimposed and printed on the card. Subsequently, the central processing unit (CPU) of the camera analyzes the dot pattern using analysis software and converts the dot pattern into a dot code. This dot code is transmitted to the central processing unit of a computer. The computer's central processing unit reads the application ID and the card surface number, refers to the relevant table, and searches an application ID and card surface number for the touch panel chassis. Next, the computer's central processing unit obtains an application ID and card surface number for the pen-shaped scanner (for execution) corresponding to the application ID and card surface number for the touch panel (for input), and starts up the corresponding application.
When a touch panel chassis is used, a user executes an application on the opposite surface to the application signified by the dot pattern read by the camera. For this reason, above processing is required.
On the other hand, when a user uses a pen-shaped scanner, the central processing unit of a computer reads an application ID and a card surface number from the dot pattern read by the camera in the pen-shaped scanner, then, starts up a corresponding application.

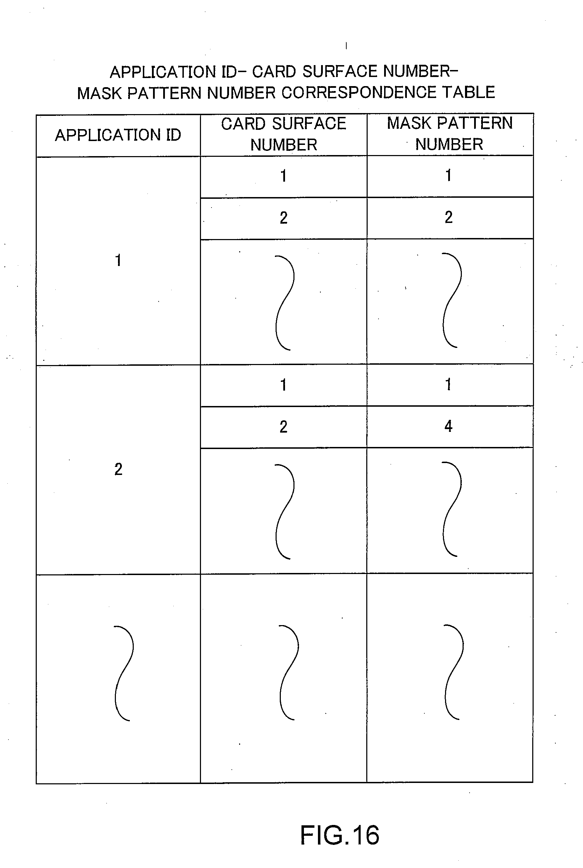

Figure 16 is a diagram illustrating an application ID-card surface number-mask pattern number correspondence table. Figure 15-2 is a diagram illustrating a mask pattern number-coordinate value-mask number correspondence table.
As shown in Figure 16, an application ID corresponds to one or a plurality of card surface numbers and each card surface number corresponds to a mask pattern number. The mask pattern number is a number showing arrangements of a mask number and a mask on a card surface. It is possible that the same mask patterns correspond to different card surface numbers.

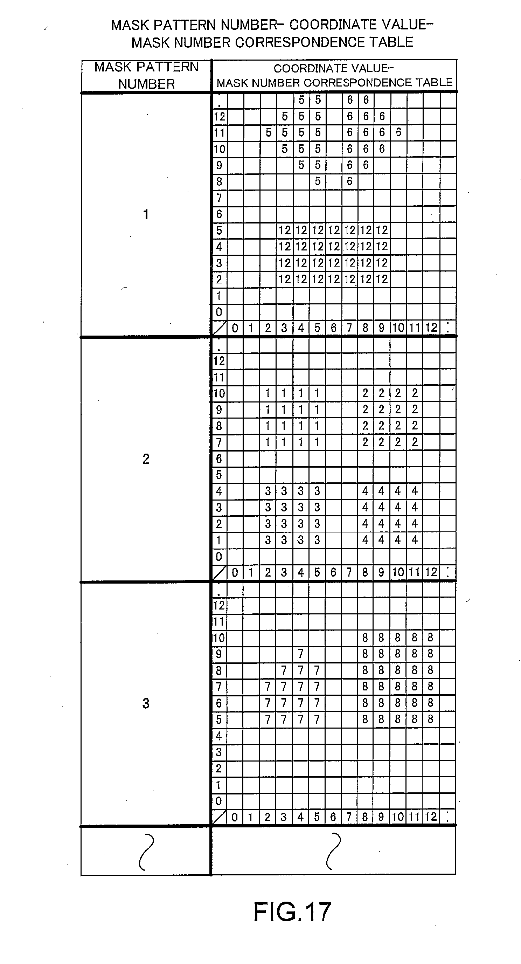

The central processing unit refers to the application ID-card surface number-mask pattern number correspondence table to obtain a mask pattern number that corresponds to the obtained application ID and card surface number. As shown in Figure 17, each mask pattern number is related to a mask pattern number-coordinate value-mask number correspondence table.

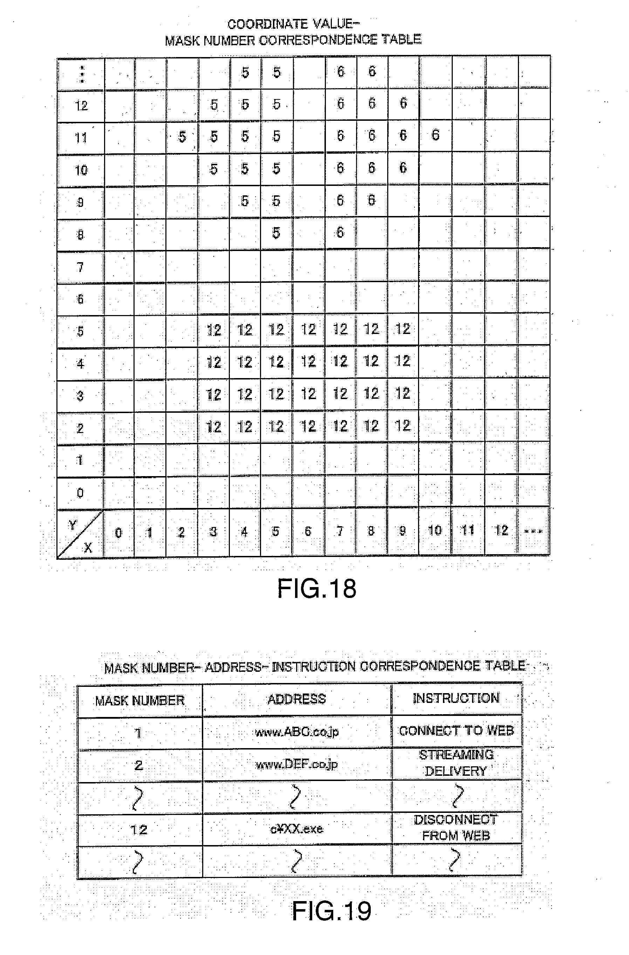

Figure 18 is an example of a coordinate value-mask number correspondence table. In this table, a mask number is set for an XY coordinate value corresponding to the location of an icon on a card.

Figure 19 is a diagram illustrating a mask number-address-instruction correspondence table. The table registers an address and instruction corresponding to a mask number. For example, an Internet address (URL) is registered in mask number 1, and this address means an instruction to connect to a Web. A local drive and execution file is registered in mask number 12, and the instruction means disconnecting from a Web.

Using these tables in Figures 15 to 19, when a user places a card on a touch panel chassis or when a user clicks a mask region with a pen-shaped scanner, a desired process can be performed.

Further, if the mask region on a card surface is clicked with a pen-shaped scanner, the pen-shaped scanner reads an X coordinate value and Y coordinate value registered in the read dot pattern, obtains a corresponding mask number using the coordinate value-mask number correspondence table shown in Figure 18, then, refers to the table shown in Figure 19 to execute an instruction registered for the mask number.

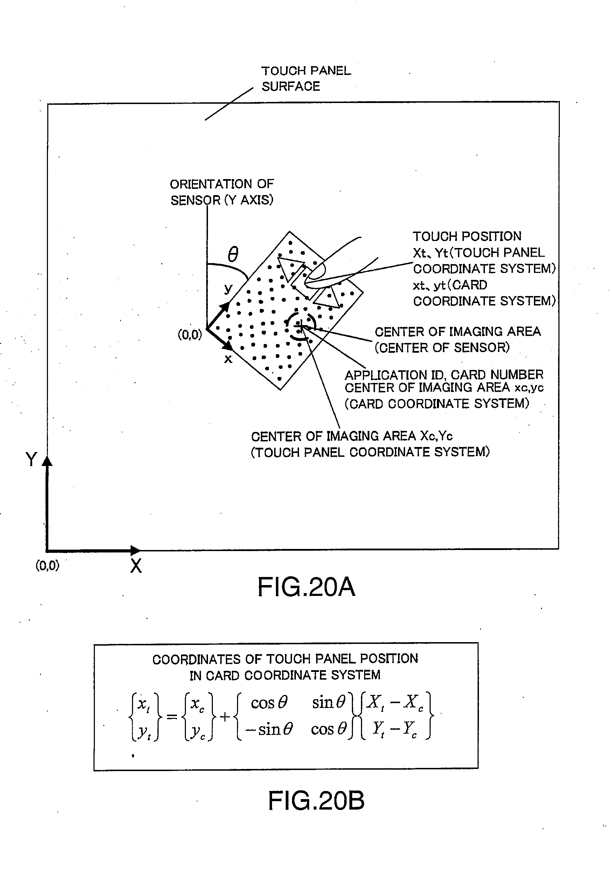

On the other hand, if a card is placed on a touch panel chassis, and a user's fingertip touches a mask region, a coordinate value of the touch position in the card coordinate system is calculated in a manner shown in Figure 20.

In the touch panel (coordinate recognition unit) coordinate system, it is assumed that the coordinates of the central position of the camera (imaging unit) are (Xc, Yc).

It is also assumed that the central position of the imaging area of a card imaged by the camera is expressed as (xc, yc) in the card coordinates system.

At the same time, an angle between Y direction in the touch panel coordinate system and y direction in the card coordinate system (the rotating angle of a card) is $\theta$.

In such case, the touch position by a user's fingertip as expressed in the touch panel coordinate system is (Xt, Yt).

Here, the touch position in the card coordinate system (xt, yt) is expressed by the following equation.

$$\begin{Bmatrix} x_t \\ y_t \end{Bmatrix} = \begin{Bmatrix} x_s \\ y_s \end{Bmatrix} + \begin{Bmatrix} \cos\theta & \sin\theta \\ -\sin\theta & \cos\theta \end{Bmatrix} \begin{Bmatrix} X_t - X_s \\ Y_t - Y_s \end{Bmatrix}$$

By performing such an arithmetic processing, it is possible to recognize which part of the print on the card surface is touched by a fingertip, regardless of the orientation of the card placed on the surface of the touch panel.

When the central processing unit calculated the touch position, it obtains a mask number corresponding to the touch position using the coordinate value-mask number corresponding table shown in Figure 18. Then the central processing unit refers to the table shown in Figure 19 to execute an instruction registered for the mask number.

(Specific Example)

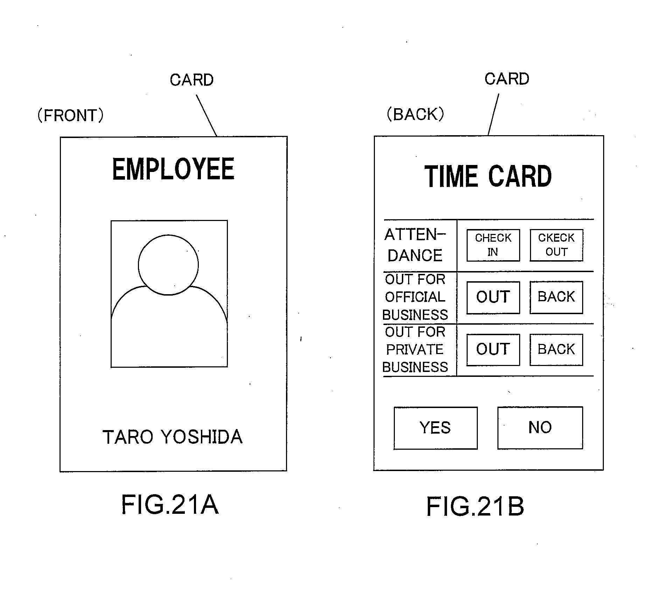

Next, a specific example is described from a touch or a click on a mask region by a user through the execution of an instruction corresponding to the mask region with reference to Figures 21A to 23.

Figures 21A and 21B show a card; Figure 21A is the front surface of the card and Figure 21B is the back surface of the card. This card is made as an employee card on the front surface and a time card on the back surface.

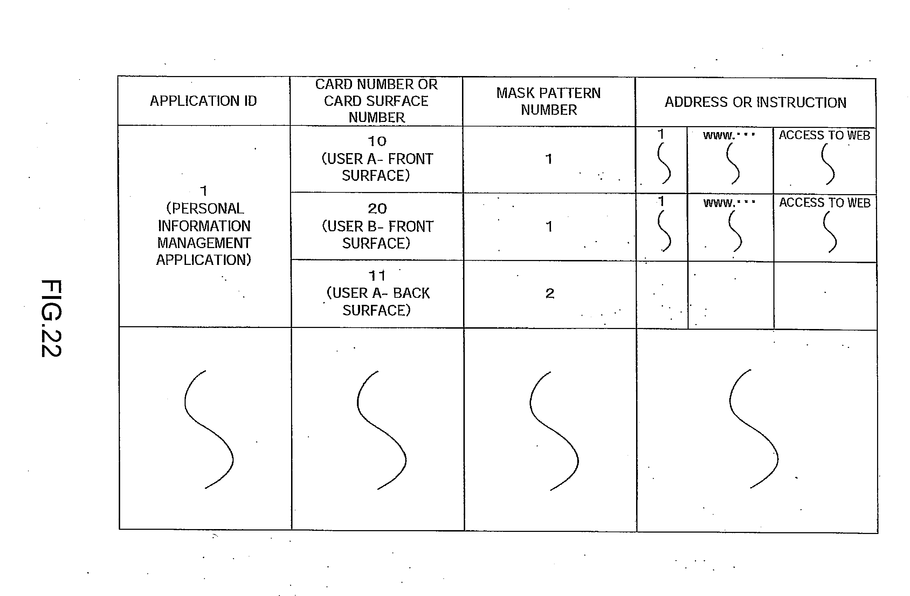

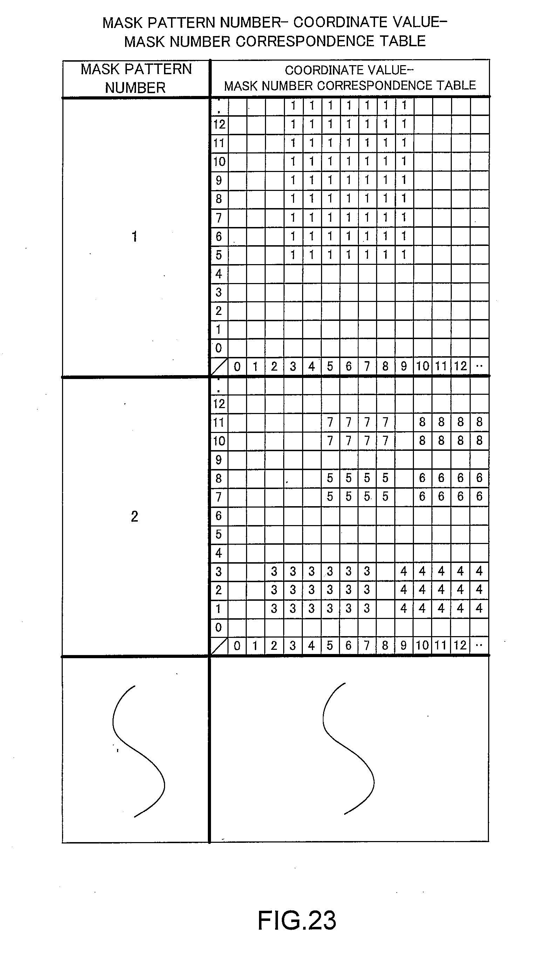

Figures 22 and 23 are diagrams illustrating tables used in this embodiment. The table shown in Figure 22 is a table showing a correspondence among an application ID, a card surface number (or a card number), a mask pattern number, and an address or an instruction. The table shown in Figure 23 is a table showing a correspondence among a mask pattern number, a coordinate value, and, a mask number.

In this embodiment, application ID = 1 means a personal information management application. Also, card surface number = 10 means a front surface of user A, 20 means a front surface of user B, and 11 means a back surface of the user A.

First, the case for using a touch panel chassis is described.

If a user places a card while turning the front surface upward above the imaging opening of the touch panel, the camera in the touch panel chassis reads out a dot pattern superimposed and printed on the back surface of the card. Then, the central processing unit (CPU) of the camera analyzes the dot pattern using analysis software and converts the dot pattern into a dot code. This dot code is transmitted to the central processing unit of a computer. The central processing unit of the computer reads the application ID and the card surface number and searches an application ID and card surface number for a touch panel chassis (for input) in a front and back surface correspondence table described in Figure 15. Then, the central processing unit acquires from the table an application ID and card number for a pen-shaped scanner, which corresponds to the application ID and card surface number for the touch panel chassis, and starts up a corresponding application. Next, the central processing unit refers to the table in Figure 22 to search an application ID and a card surface number. That is, the central processing unit searches the application ID = 1 and the card surface number = 10. Then, the central processing unit searches a corresponding mask pattern number to obtain the mask pattern number = 1.

Then, the central processing unit refers to the mask pattern number-coordinate value-mask number correspondence table in Figure 23 to obtain a coordinate value-mask number correspondence table. Mask number 1 is registered at the position of the photograph of the user's face on the front surface of the card. When the photograph is touched by a user's finger, the central processing unit calculates the coordinate values of the touch position by the manner described in Figures 20A and 20B, and obtains mask number = 1 corresponding to the coordinate values of the touch position from the obtained coordinate value-mask number correspondence table. Then, the central processing unit refers to an address or an instruction of the table in Figure 22 to execute the relevant processing. Since an Internet address (URL) is registered for mask number 1, a browser program is started up and accesses the registered Internet address.

Next, the case for using the pen-shaped scanner is described.

When user A clicks the photograph of user A's face on the front surface with a pen-shaped scanner, the central processing unit of a computer reads the application ID = 1 and the card surface number =10 from the dot pattern read out by the camera in the pen-shaped scanner, and starts up a corresponding application. Next, the central processing unit refers to the table in Figure 22, and searches the application ID and the card surface number. That is, the central processing unit searches application ID = 1 and card surface number = 10. Then, the central processing unit searches a corresponding mask pattern number to obtain the mask pattern number = 1. Subsequently, the central processing unit refers to the mask pattern number-coordinate value-mask number correspondence table to obtain a coordinate value-mask number correspondence table. The central processing unit obtains from the coordinate value-mask number correspondence table a mask number corresponding to XY coordinate values read out by the pen-shaped scanner. That is, it obtains mask number = 1. Then, the central processing unit refers to an address or an instruction in the table in Figure 22 to execute a corresponding processing. Since the mask number 1 registers an Internet address (URL), a browser program is started up and accesses the registered Internet address.

<Second Embodiment>

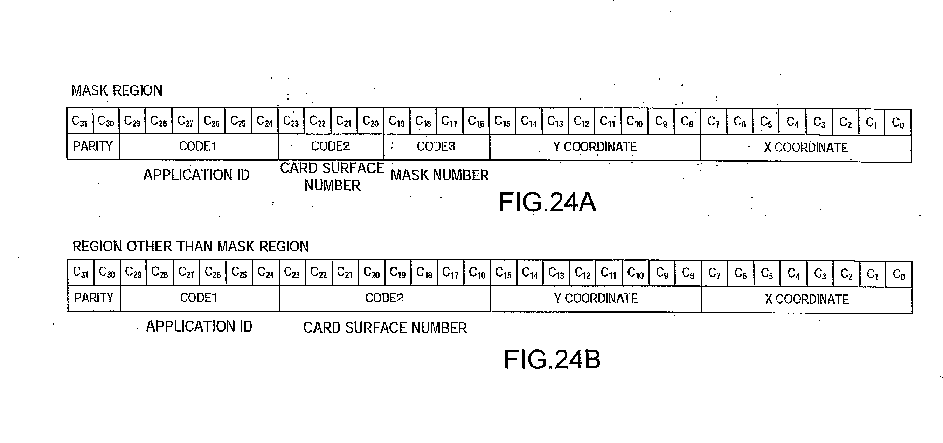

Figures 24A to 25 describe the second embodiment. This embodiment is **characterized in that** a mask number is included in a dot pattern.

Figures 24A and 24B are diagrams showing dot code formats for the first embodiment of the present invention.

Figure 24A shows a dot code format in a mask region. C0 to C7 register an X coordinate; C8 to C15 register a Y coordinate; C16 to C19 register a mask number (CODE3); C20 to C23 register a card surface number (CODE2); C24 to C29 register an application ID (CODE1); C30 to C31 register parity.

Figure 24B shows a dot code format in regions other than the mask region. C0 to C7 register an X coordinate; C8 to C 15 register a Y coordinate; C16 to C23 register a card surface number (CODE2); C24 to C29 register an application ID (CODE1); and, C30 to C31 register parity.

Description is omitted for when a user uses a card by placing it on a touch panel chassis, since the method for reading the card surface and the method for executing an instruction are the same as the first embodiment.

When a user clicks a mask region with a pen-shaped scanner, the central processing unit of a computer reads an application ID, a card surface number, a mask number, and XY coordinates from the dot pattern read out by the camera in the pen-shaped scanner, then, starts up an application corresponding to the application ID and card surface number.

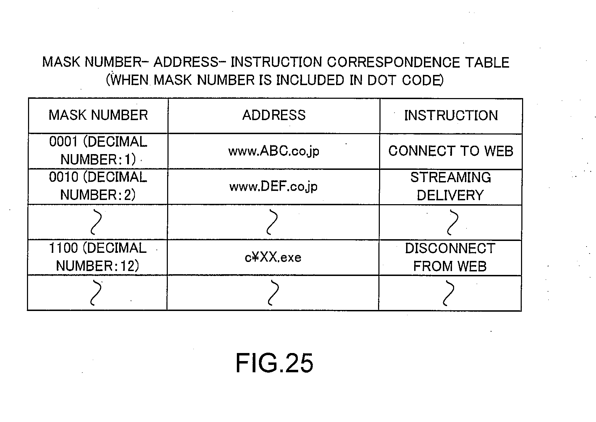

Next, the central processing unit of the computer refers to the mask number-address-instruction correspondence table, accesses an address corresponding to the obtained mask number to execute an instruction. The table shown in Figure 25 is a table corresponding a mask number in a specified card surface to a specified application.

When an identical system is used for a touch panel chassis and a pen-shaped scanner, since the tables shown in Figures 16 to 19 can be used as is, the pattern shown in the first embodiment still can be used.

However, when different systems are used for a touch panel chassis and for a pen-shaped scanner, if the pattern shown in the first embodiment is used, the above-described tables are required even for the system for a pen-shaped scanner, which makes the system complicated. If a mask number is to be included in a dot pattern, it is easier to print the mask number to eliminate the need for the above-described tables, although a mask number region is additionally required to be defined as a dot code.

<Third Embodiment>

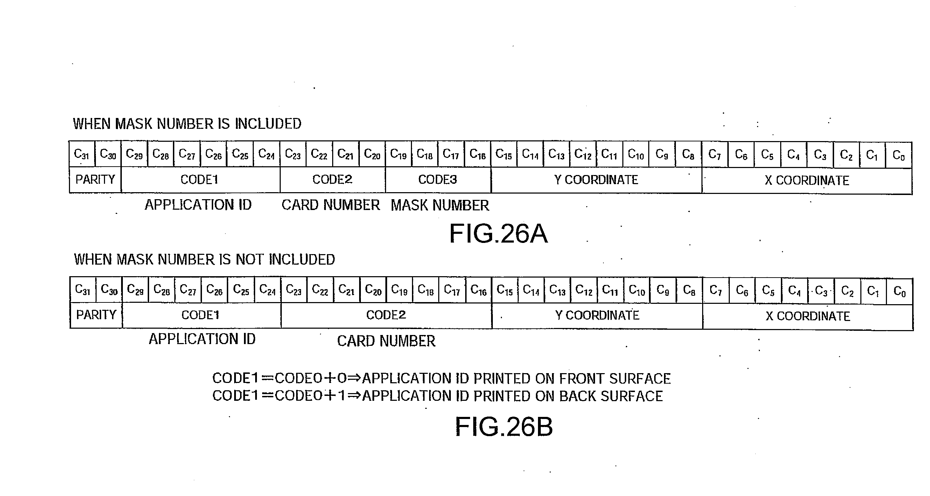

Figures 26A to 28B describe the third embodiment. This embodiment is characterized by different last bit of an application ID.

Figure 26A shows a dot code format including a mask number. C0 to C7 register an X coordinate; C8 to C15 register a Y coordinate; C16 to C19 register a mask number (CODE3); C20 to C23 register a card number (CODE2); C24 to C29 register an application ID (CODE1); and, C30 to C31 register parity.

Figure 26B shows a dot code format not including a mask number. C0 to C7 register an X coordinate; C8 to C15 register a Y coordinate; C16 to C23 register a card number (CODE2); C24 to C29 register an application ID (CODE1); and, C30 to C31 register parity.

The last bit of the application ID determines whether front surface or back surface of the card. That is, an application ID (CODE1) is composed of CODE0 + 0 or CODE0 + 1. If the last bit is 0, the application ID is printed on the front surface. If the last bit is 1, the application ID is printed on the back surface.

In this embodiment, since the card surface is determined by the last bit of the application ID, a card surface number for specifying the card surface is not required. Therefore, both surfaces of the card register the same value for the card numbers.

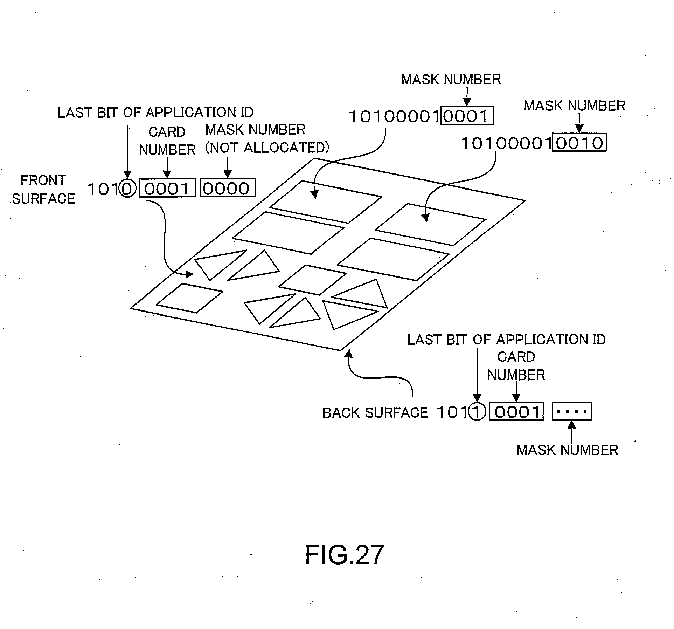

Figure 27 is an explanatory diagram showing an illustrative example of a code value in each region of the card in a dot code shown in Figure 26A.

As shown in Figure 27, the application ID on the front surface is 1010, and the application ID on the back surface is 1011. The card number is 0001 on both front and back surfaces. Mask numbers, such as 0001, 0010, are registered in the mask region. In regions other than the mask region, 0000 is registered in a region equivalent to the region where a mask number is supposed to be registered, which means that no mask is allocated.

For example, if a card is placed on a touch chassis, and CODE1 (application ID) = 1011 is read out, the last bit of CODE1 is inverted. By this operation, an actual application ID indicating an application which is actually started up is obtained. In this case, the actual application ID is 1010. Accordingly, the central processing unit of a computer starts up an application corresponding to the application ID 1010. Next, the central processing unit calculates XY coordinate values of the position touched by a user's finger in the card coordinate system, and refers to a coordinate value-mask correspondence table corresponding to the application ID of the running application and the card number to obtain a mask number. Then, the central processing unit refers to the mask number-address-instruction correspondence table shown in Figure 19 and performs processing corresponding to the mask number.

If a mask region of the card is clicked with a pen-shaped scanner, the read application ID becomes the actual application ID as is. For example, if CODE1 = 1010 is read, the actual application ID is also 1010. The central processing unit of the computer reads out the application ID, card number, and mask number, refers to the mask number-address-instruction correspondence table shown in Figure 19, and performs processing corresponding to the mask number.

Next, although not shown in the drawings, a method for executing an instruction when using a card using a dot code shown in Figure 26B is described.

Description is omitted for the case in which a card is placed on a touch panel chasses, as it is the same as the case shown in Figure 26A in which a dot code is used.

If the mask region of the card is clicked with a pen-shaped scanner, the read application ID becomes the actual application ID as is. The central processing unit of the computer reads an application ID, card number, and XY coordinates, obtains a mask number from the table shown in Figure 18, refers to the mask number-address-instruction correspondence table shown in Figure 19, and performs processing corresponding to the mask number.

In this way, determining whether the front or back surface of the card by the last bit of the application eliminates the need for storing a table shown in Figure 15 in the system, thereby realizing a simple program.

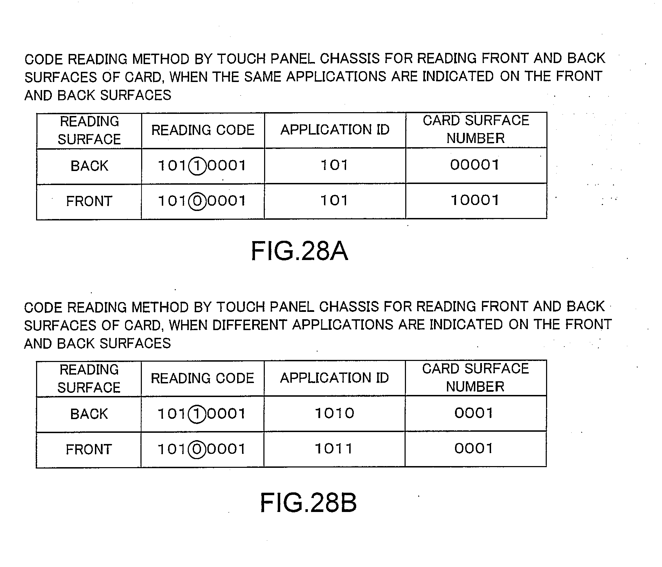

Figures 28A and 28B are diagrams illustrating other method for reading a code when a touch panel chassis is used in this embodiment. This method is characterized by defining a card surface number instead of a card number even when different reading code, 0 or 1, is used for the front and back surfaces.

Figure 28A shows a case in which a card of which applications are the same between the front and back surfaces is read by an imaging unit of a touch panel chassis. It is assumed that the reading code is 10110001 when the back surface is read, and 10100001 when the front surface is read. Since the front and back surfaces indicate the same application, the application IDs are 101 for both the front and back surfaces. Then, as the card surface to be actually executed is the opposite surface to the read surface, 0 and 1 are inverted. That is, if the read surface is the back surface, the card surface number for execution is 00001, and if the read surface is the front surface, the card surface number for execution is 10001.

Figure 28B shows a card of which applications are different between the front and back surfaces is read by the imaging unit of the touch panel chassis. It is assumed that the reading code is 10110001 when the back surface is read, and 10100001 when the front surface is read. Since applications on the front and back surfaces are different, application IDs for both surfaces are different. Again, since the card surface to be actually executed is the opposite surface to the read surface, 0 and 1 are inverted. That is, the application ID for execution on the back surface is 1010 and the application ID for execution on the front surface is 1011. Also, the card surfaces are 0001 for both the front and back surfaces.

In this way, a card surface number instead of a card number may be defined for the case in which different reading codes, 0 or 1, are used for the front and back surfaces.

<Fourth Embodiment>

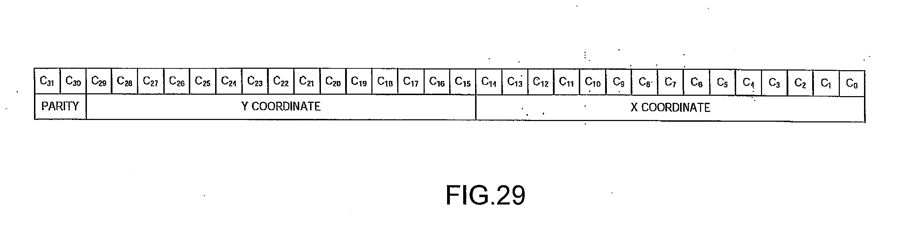

Figures 29 to 32B describe the fourth embodiment. This embodiment is **characterized in that** only XY coordinate values are registered in a dot pattern.

Figure 29 shows a dot code format in each region. C0 to C14 register an X coordinate; C15 to C29 register a Y coordinate; and, C30 to C31 register parity.

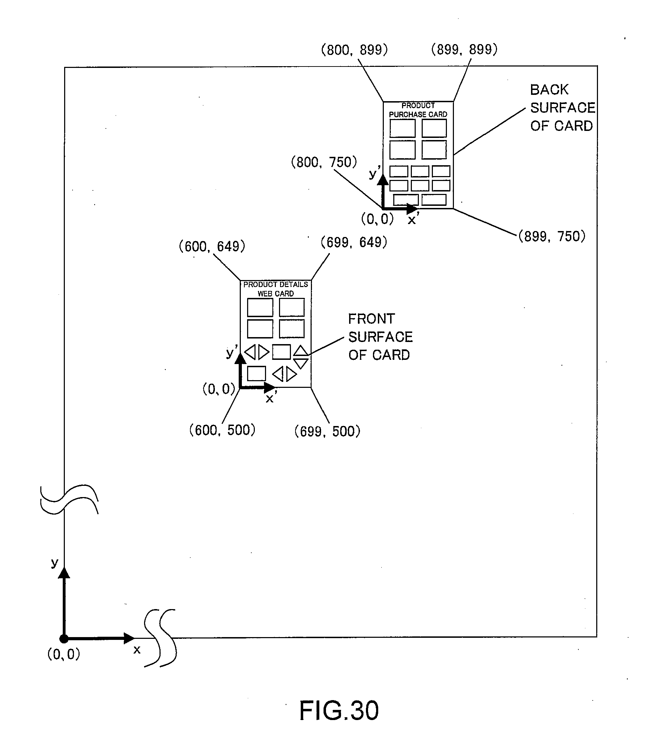

Figure 30 is a diagram illustrating an illustrative example of coordinate values. In this embodiment, different coordinate values are used by a card or a card surface. That is, part of a whole coordinate system (x, y) is cut out. To obtain a coordinate value in a card coordinate system (x', y'), the coordinate values in the whole coordinate system are divided by the coordinate values at the origin of each card surface (in Figure 30, (600, 500) for the front surface and (800, 750) for the back surface).

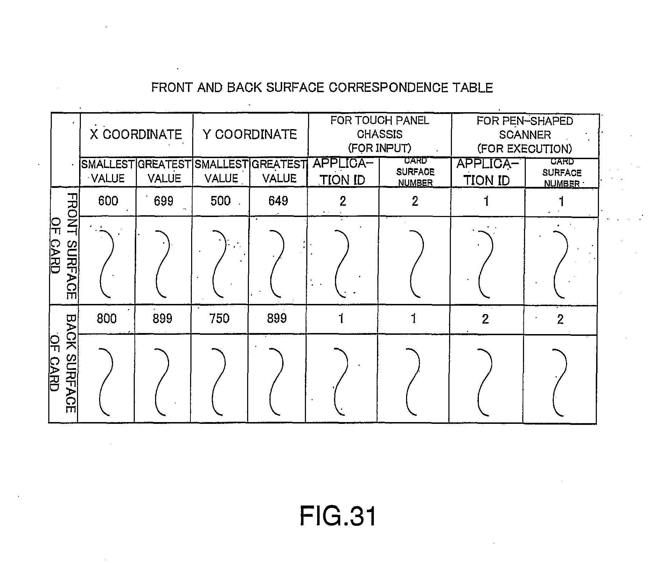

Figure 31 shows a front and back surface correspondence table. The table relates a smallest value and greatest value in x coordinates, a smallest value and greatest value in y coordinates, front and back surfaces of the card, and application IDs and card surface numbers for a touch panel chassis (for input) and for a pen-shaped scanner (for execution).

If a card is placed on a touch panel chassis, an x coordinate value or a y coordinate value registered in the dot pattern is read. The dot pattern registers coordinate values in the whole coordinate system. The central processing unit of a computer refers to the smallest value and greatest value of x coordinate and the smallest value and greatest value of y coordinate in the table, and searches the application ID and card surface number for the touch panel chassis (for input). Then, the central processing unit obtains corresponding application ID and card surface number for the pen-shaped scanner (for execution) and starts up the corresponding application.

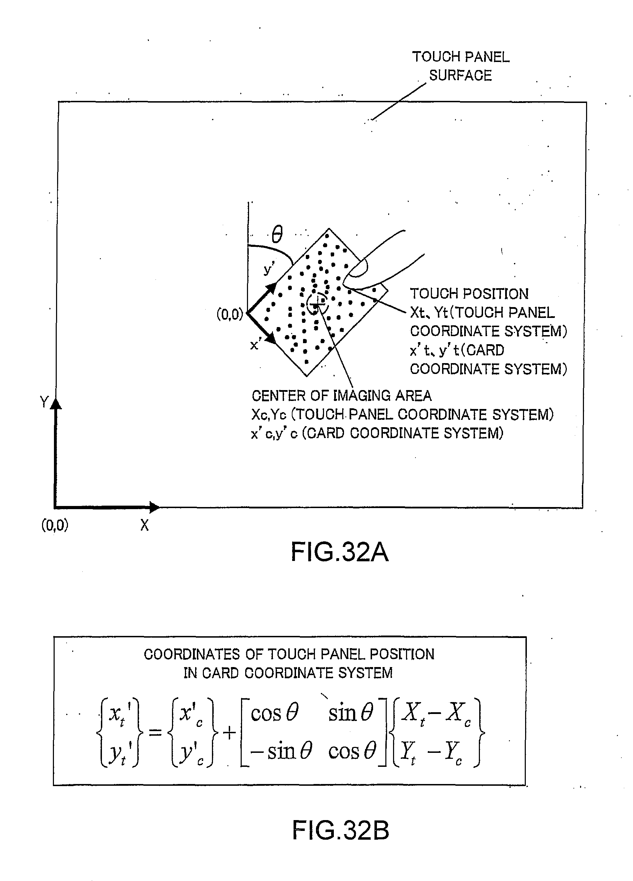

Next, the central processing unit calculates the position touched by a user in a manner shown in Figures 32A and 32B.

The central processing unit divides the read x coordinate and y coordinate values (values at the center of the camera's imaging area) by the smallest value indicated in the front and back surface correspondence table to obtain coordinate values (x'c, y'c) in the card coordinate system with the origin being the lower corner of the card.

It is assumed that the angle between a Y direction in the touch panel coordinate system and a y' direction in the card coordinate system (rotation angle of the card) is θ.

Here, it is assumed the touch position by a use's fingertip is (Xt, Yt) as expressed by the touch panel coordinate system.

In this case, the touch position (x't, y't) is expressed by the following equation.

$$\begin{Bmatrix} x'_t \\ y'_t \end{Bmatrix} = \begin{Bmatrix} x'_c \\ y'_c \end{Bmatrix} + \begin{bmatrix} \cos\theta & \sin\theta \\ -\sin\theta & \cos\theta \end{bmatrix} \begin{Bmatrix} X_t - X_c \\ Y_t - Y_c \end{Bmatrix}$$

Next, these coordinate values (x't, y't) are referred to the coordinate value-mask number correspondence table shown in Figure 16 which corresponds to the card surface number as a measure to control application and obtains a mask number to perform application's processing set uniquely for the card surface.

If the mask region is clicked by a pen-shaped scanner, an x coordinate value and a y coordinate value registered in the dot pattern are read. The central processing unit of the computer searches an application ID and card surface number for the pen-shaped scanner (for execution) and starts up the corresponding application. Next, the central processing unit divides the read xy coordinate values by the smallest value indicated in the table to obtain coordinate values (x', y') in the card coordinate system. These x', y' coordinate values are referred to the coordinate value-mask number correspondence table shown in Figure 18 which corresponds to the card surface number as a measure to control application, obtains the mask number, and performs application's processing set uniquely for the card surface.

<Fifth Embodiment>

In the embodiments described above, tables described above may be stored in a server through a network, instead of a central processing unit of a computer.

If the central processing unit of a computer (a control unit) or a pen-shaped scanner (a second optical reading unit) detects that, for an application ID or a card surface number obtained from a dot pattern on the back surface or the front surface of a card, an application program corresponding to the application ID or tables necessary to execute the application program do not exist inside or outside the central processing unit or the pen-shaped scanner, the central processing unit or the pen-shaped scanner downloads the application program or the tables from a server connected through a network.

This technology is called GAM (Grid Application Manager), which is the name of an application program installed in a hard disc device of a computer.

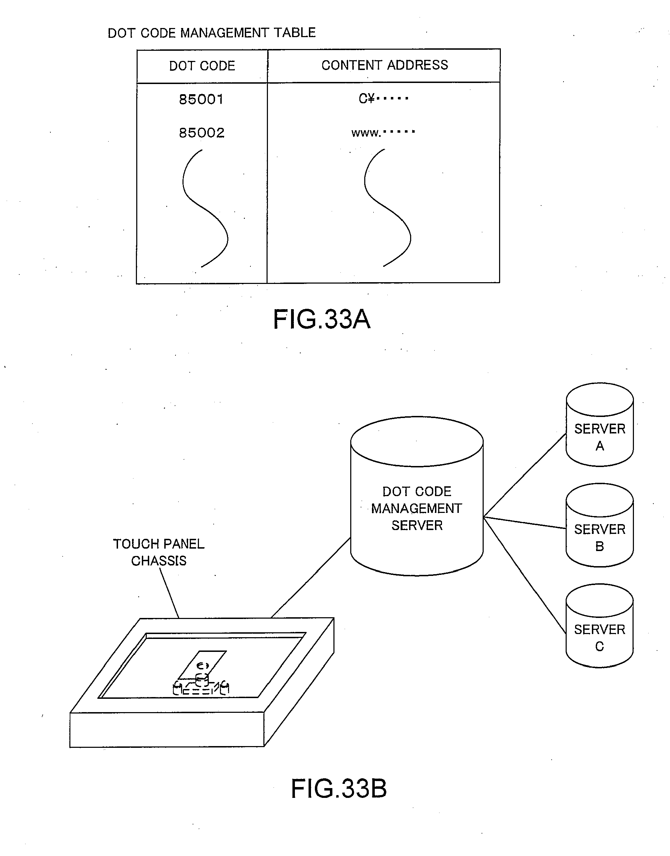

This GAM is described in details by reference to Figures 33A and 33B.

A user executes an install program, from a CD-ROM or downloaded by accessing an Internet delivery server, on a personal computer (PC), and registers GAM and the driver program as resident programs to OS (Operating system). At the same time, the user also installs content data bundled with GAM, such as an application program, an image, and a motion picture, into the hard disc device (HD).

Next, if a touch panel chassis or a pen-shaped scanner is connected to a USB terminal, the driver program as the resident program recognizes the connection.

Then, if a paper medium or a card with a printed dot pattern is placed on the touch panel or scanned (read) by the pen-shaped scanner, the dot pattern is imaged and the captured image data is input into a personal computer and decoded to a dot code (a code number) composed of 32 bit digit sequence.

Based on the dot code (a code number), a dot code management table for GAM (an index table) shown in Figure 33A is referred to.

Here, if the dot code (a code number) is already registered in the index table, the dot code is recognized as the content data which has already been installed in the personal computer (PC) and the content data is retrieved and reproduced. If the content data is a motion picture or an image, the movie or the image is displayed on a display device (DISP) by a corresponding motion picture reproducing application program or image displaying program.

Also, if an Internet address (URL) is registered in the dot code (a code number) in the index table, a browser program (such as the Internet Explorer of Microsoft) is started up and accesses the address.

Meanwhile, as shown in Figure 33B, if the dot code (code number) as a result of reading the dot pattern is not registered in a dot code management table at a local computer (in a personal computer), a dot code management server in the Internet is referred to. Here, if a dot code (code number) is registered in the management server table of the dot code management server, depending on the instruction (command) to the dot code (code number), (1) downloading of content, specifically, downloading content from a server A, (2) streaming delivery of a motion picture, specifically, data delivery from a server B as a streaming delivery server, or (3) browsing of Web, specifically, downloading of a Web file of server C specified by an address (URL), is automatically started.

Next, if the content data is downloaded to the personal computer (PC), the content data, as well as additional data (data which is a pair of a code number and an address) of the dot code management table (an index table) to start up, is downloaded, and thereafter, managed in a dot code management table (an index table) in the personal computer.

Therefore, if the same code number as described above is read out, accessing to the server A, B or C on the Internet is not performed again, yet the content data downloaded in the hard disc device (HD) of the personal computer is reproduced based on the dot code management table (an index table) including the newly added data.

<Sixth Embodiment>

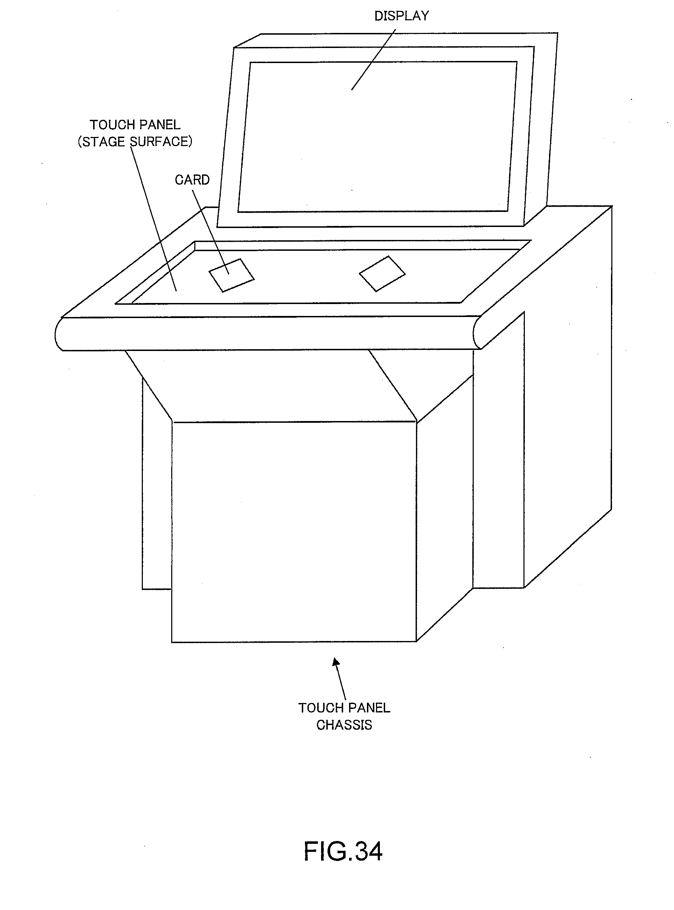

Figures 34 to 44 describe the sixth embodiment of the present invention.

Figure 34 is a perspective diagram showing a touch panel chassis (a touch panel chassis) of the present invention, This touch panel chassis is characterized as a stage type.

As shown in Figure 34, a display is facilitated to the touch panel chassis on the front side of the touch panel (a stage surface). The game proceeds in accordance with a placement position of a card, touching by a player's fingertip on the touch panel (stage surface), or touching on a card surface placed on the touch panel (stage surface). Accordingly, images and motion pictures displayed on the display change.

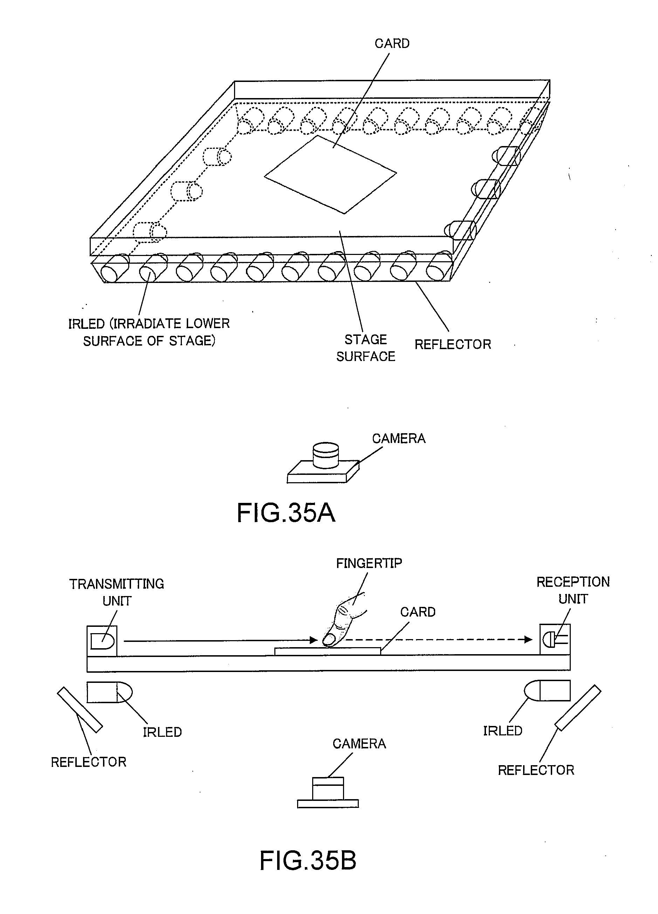

The internal structure of the stage chassis is as shown in Figures 35A and 35B. In this embodiment, if a card with a printed dot pattern is placed on a touch panel (stage surface), infrared irradiation light irradiated from IRLED irradiates the entire lower surface of the touch panel via a reflector on the flame. Infrared irradiation light reflected from the back surface of the card is captured by the camera.

Then, a sensor unit and a micro processing unit (MPU) read the dot pattern printed on the card, convert the dot pattern into a code value, and display on a display device an image or a motion picture corresponding to the code value.

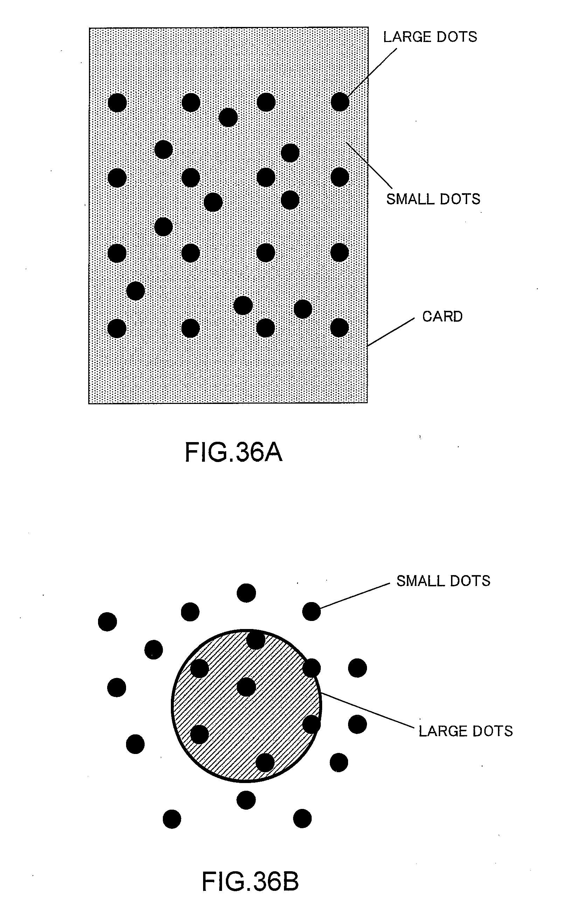

Figure 36A is a diagram illustrating a card used in this embodiment. Both surfaces of the card are superimposed and printed with two types of dot patterns as well as a drawing pattern. The two types of dot patterns are different in dot sizes. The dot pattern of large dots is read by an imaging unit of a touch panel chassis, and the dot pattern of small dots is read by an imaging unit of a pen-shaped scanner. Figure 36B is an enlarged diagram showing a state where large dots and small dots are superimposed and printed.

The dot pattern of small dots is the same as the ones described in Figures 7 to 12D, while the dot pattern of large dots uses a dot pattern different from the dot pattern of small dots.

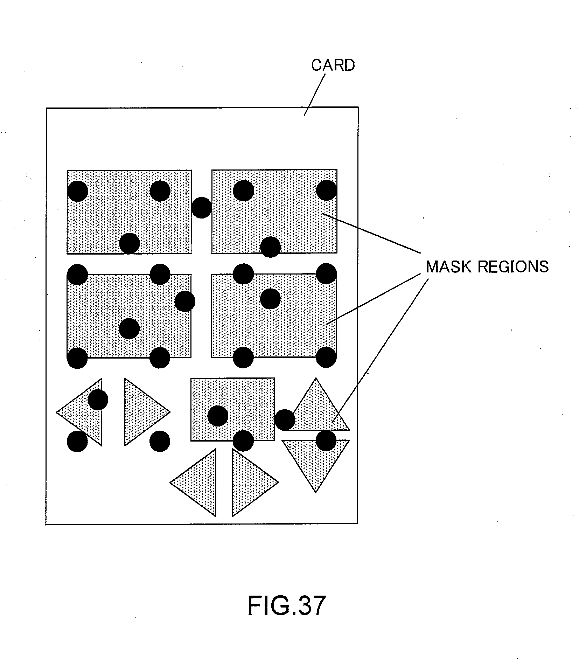

It should be noted that, for the dot pattern of small dots, small dots may be printed on the whole surface of the card as shown in Figure 36A or small dots may be printed only on mask regions as shown in Figure 37.

If small dots are printed on the whole surface of the card, the dot pattern registers XY coordinates, an application ID, and a card surface number, or registers only XY coordinates.

On the other hand, if small dots are printed only on mask regions, the dot pattern registers an application ID, a card surface number, and a mask number.

It should be noted that even if a mask number is registered in the dot pattern, XY coordinates may be included in the dot pattern. In such case, XY coordinate values may be used as parameters. For example, it is possible to change parameters according to the change of coordinate values by moving a pen-shaped scanner on a card.

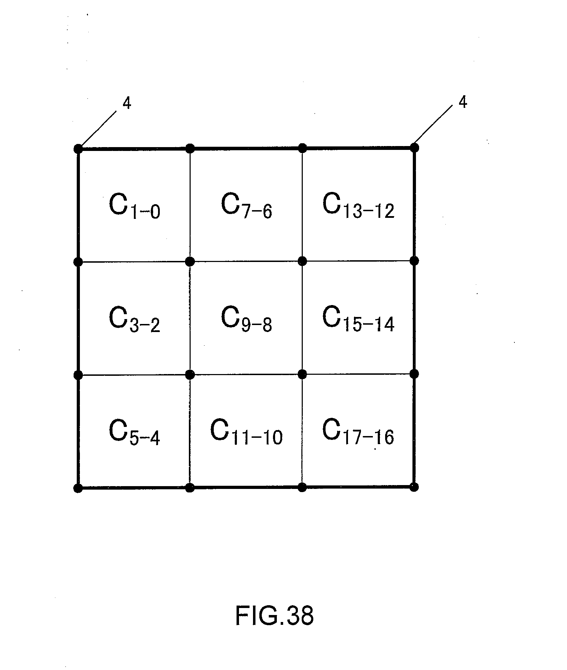

Figures 38 to 41B are diagrams for illustrating the dot pattern with large dots.

It should be noted that although the basic algorithm of this dot pattern is the same as the ones described in Figures 7 to 12D, the dot pattern is different in that only one dot pattern expressing one code is printed and the dot pattern has a direction dot indicating the direction of the dot pattern.

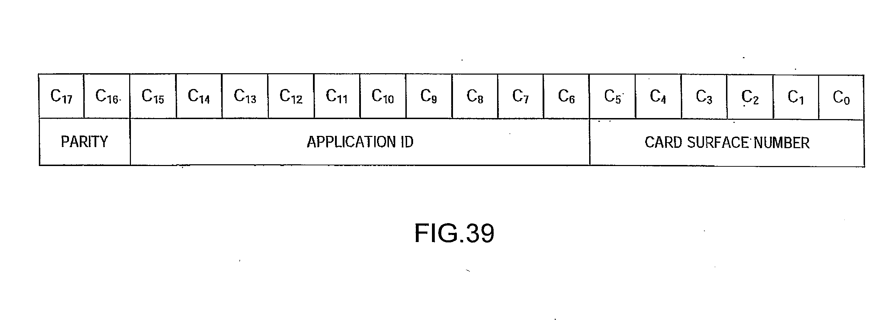

Figures 38 and 39 are explanatory diagrams showing a relationship among a dot pattern, a code value and an identifier.

As shown in Figure 38, the dot pattern is a dot pattern composed of $3 \times 3$ block regions. These blocks are divided into C1-0 to C17-16. Figure 39 shows the dot code format of each region.

As shown in Figure 39, C0 to C5 means a card surface number, C6 to C15 means an application ID, and C16 to C 17 means parity.

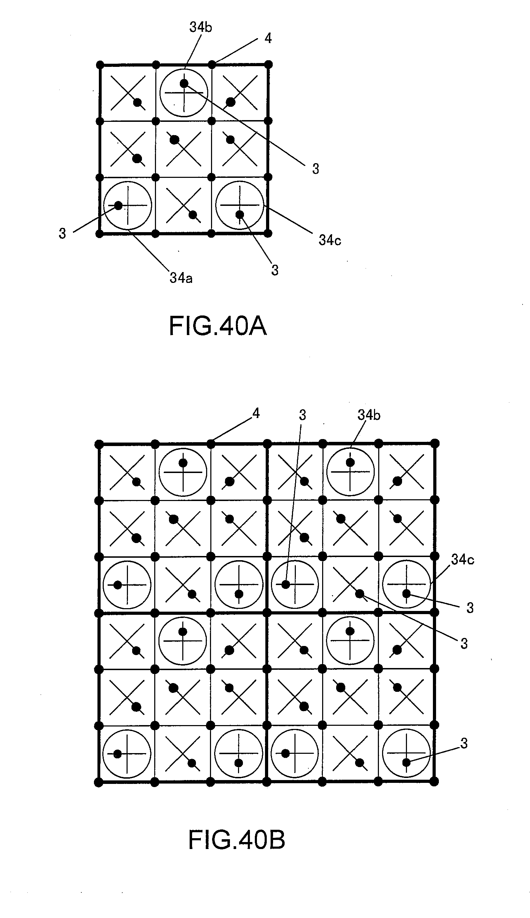

Figures 40A and 40B define, in dot patterns described in Figures 7 to12D, the direction of a block by changing orientations of information dots 3 for only specific grid regions (direction regions) from other grid regions (direction regions) in a dot pattern of a block composed of $3 \times 3 = 9$ grid regions.

That is, in Figures 40A and 40B, information dots 3 are arranged in horizontal or vertical direction from the centers in the lower left grid region 34a, central grid region 34b, and lower left grid region 34c, and information dots 3 are arranged diagonally from the centers in other grid regions. By arranging grid regions 34a, 34b, and 34c in such a way, from the triangle shape formed by connecting these grid regions, that is, from the relationship of the vertex 34b in relation to the base 34a, 34c, the block is recognized as facing upward.

As such, arrangement relationship of grid regions 34a, 34b, and 34c (in this example, a triangle) for which arrangement directions of information dots 3 in a block are changed (information dots are arranged in horizontal and vertical directions) can define a direction of the block. In this way, since information dots 3 can be arranged in all grid regions of a block without sacrificing grid regions for a key dot, all grid regions can have information dots.

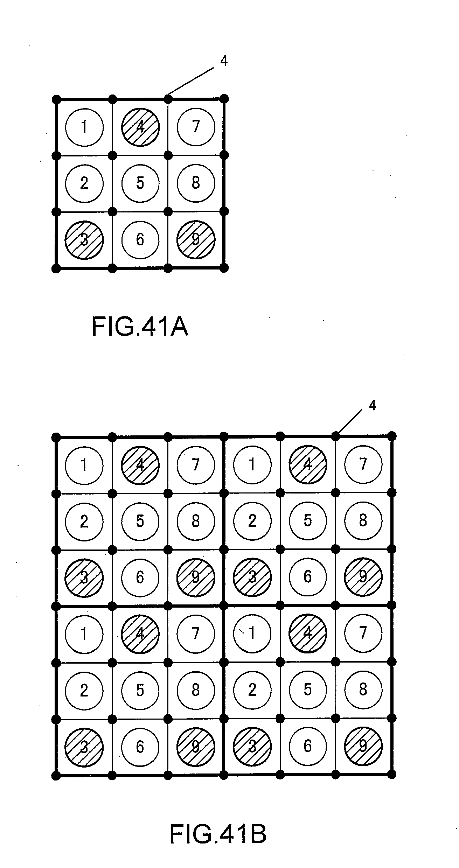

Figures 41A and 41B are diagrams showing arrangement states of information dots 3 corresponding to Figures 40A and 40B.

It should be noted that if a dot pattern is printed on the back surface of a card, the distance between grids is preferably about 15 mm, and the size of a dot is preferably about 15% of the distance between dots. Therefore, the size is preferably 2 mm to 2.5 mm, but not limited to this. The resolution of the distance between dots when the image was captured is preferably 14 pixels or more.

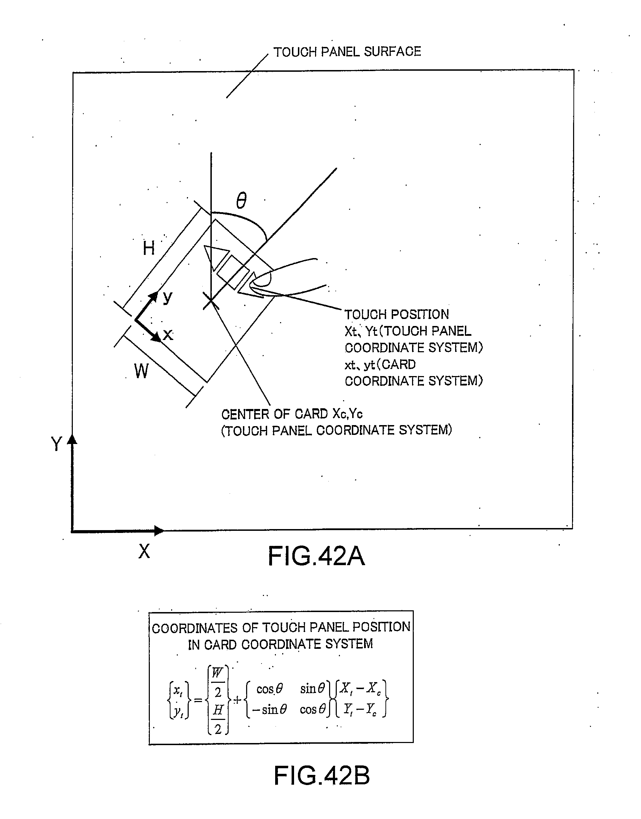

Figures 42A and 42B are diagrams illustrating a method for calculating a position touched by a user's fingertip (a touch position) when a card is used with a touch panel chassis.

It is assumed that the card width is W, height is H, and the coordinates at the central position of the card in touch panel coordinate system are (Xc, Yc). Also, the rotation angle of the card, that is, an angle between the Y direction in the touch panel coordinate system and the y direction in the card coordinate system is θ.

At the same time, a touch position by a user's fingertip is (Xt, Yt) as expressed in the touch panel coordinate system.

In such case, the touch position (xt, yt) in the card coordinate system is expressed by the following equation.

$$
\left\{ \begin{array}{c} x_t \\ y_t \end{array} \right\} = \left\{ \begin{array}{c} \dfrac{W}{2} \\ \dfrac{H}{2} \end{array} \right\} + \left\{ \begin{array}{cc} \cos\theta & \sin\theta \\ -\sin\theta & \cos\theta \end{array} \right\} \left\{ \begin{array}{c} X_t - X_c \\ Y_t - Y_c \end{array} \right\}
$$

Performing such arithmetic processing enables recognition as to which part of the print on the card surface is touched by a fingertip, regardless of the card orientation on the touch panel (a stage).

It goes without saying that, although, in Figure 42A, a card surface is touched by a fingertip of a player/operator, touching may be done by a touch pen or the like.

A method for reading a dot code and executing an instruction when using a touch panel chassis is the same as in the above-described embodiments, so the description is omitted.

Also, a method for reading a dot pattern (a dot pattern of small dots) and a dot code and executing an instruction when a pen-shaped scanner is used is the same as in the above-described embodiments, so the description is omitted.

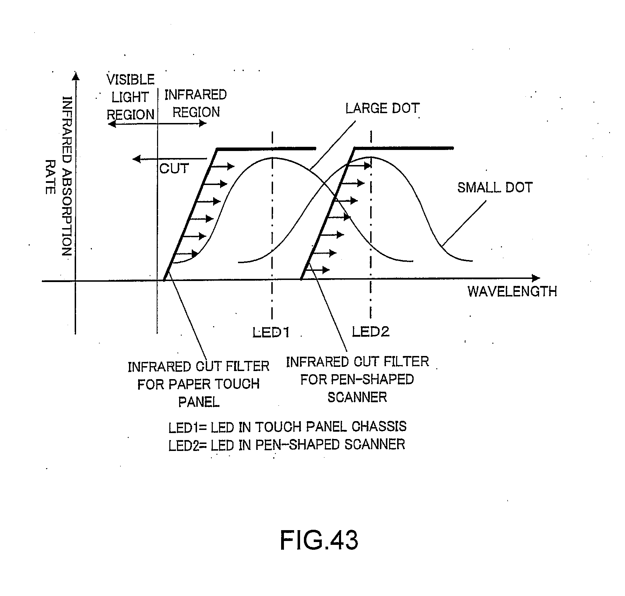

Figure 43 is a diagram illustrating characteristics of the two types of dots.

The large dots are printed with ink of lower peak wavelength than the ink for the small dots. Also, as for an LED as an infrared irradiation unit, the wavelength characteristic of the LED in the touch panel chassis has a short wavelength characteristic than that of an LED in the pen-shaped scanner. Moreover, while the infrared cut filter attached on the surface of the camera lens in the touch panel chassis cuts only wavelength lower than the region close to visible light, the infrared cut filter in the pen-shaped scanner cuts wavelength in relatively high wavelength region.

Having such structures, when a dot pattern is captured by the camera in the touch panel chassis, the image of large dots can be clearly captured. This is because even when small dots are captured, small dots are hardly recognized and do not disturb the recognition of the dot pattern of large dots. Likewise, when a dot pattern is captured by a pen-shaped scanner, only small dots can be captured. This is because the infrared cut filter cuts out the wavelength where the large dots' infrared absorption rate shows peak.

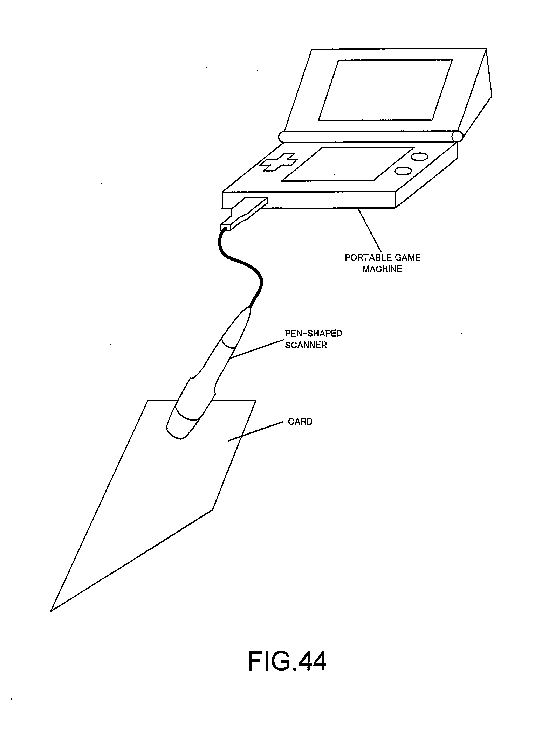

Moreover, the card according to the present invention may be used with a portable game machine as shown in Figure 44. In such case, a mask table is stored in a server, for example, at a game center. A user downloads the mask table in the server from a stage chassis at a game center to a portable game machine using a network.

In this way, the user can enjoy a game using a card not only at a game center but at home or the like, thereby providing highly convenient and entertaining properties.

It goes without saying that, in the present invention, the second optical reading unit and the stage chassis having the first optical reading unit are not limited to the above described embodiments, and may take other embodiments as long as they do not depart from the subject of the present invention.

Industrial Applicability

By making a card have a variety of functions, the present invention may be used in a variety of fields including an arcade game which is performed by placing a card on a stage surface, mail order, and time management of employees at offices.

## Claims

1. A method for reading a card surface and executing an instruction, wherein, dot patterns are formed on a front surface and a back surface of a card, and different applications each allocated to the front and back surfaces of the card can be executed,
   wherein, each of the dot patterns on the front surface and the back surface of the card is made into a pattern with an application ID which specifies the application allocated to the relevant surface, a card surface number which specifies a card surface, and XY coordinates (dot coordinates; for example, card coordinates with a lower left corner as origin), and
   a stage chassis comprises:

   an optical reading unit mounted inside the chassis as a first optical reading unit for imaging the dot pattern on the back surface of the card from underneath a stage surface (inside the chassis) in a condition in which the card is placed on the stage surface provided on top of the stage chassis;
   a touch panel unit for detecting a touch position by a fingertip or the like on the stage surface;
   a storage unit for storing a correspondence table for relating each of the application IDs of the front and back surfaces of the card with the card surface number, a mask table for relating each of the card surface number with a mask number allocated for each predetermined region on XY coordinates, an instruction table for relating the mask number with an instruction, and an application program; and
   a control unit for controlling the first optical reading unit inside the chassis, the touch panel unit, and the storage unit,
   wherein, when the first optical reading unit captures an image of the dot pattern on the back surface of the card, the control unit of the stage chassis executes a process which comprises:

a step for calculating a location and an orientation (an angle) of the card on the stage surface from XY coordinates of the dot pattern on the back surface of the card (dot coordinates; card coordinates) obtained from the captured image;

a step for referring to the correspondence table based on an application ID and a card surface number of the back surface of the card obtained from the dot pattern on the back surface of the card, and retrieving an application ID and a card surface number of the front surface of the card;

a step for detecting a touch position touched by a fingertip or the like on touch panel coordinates obtained from the touch panel unit and converting the touch panel coordinates of the touch position into XY coordinates (card coordinates) obtained from the previous step;

a step for retrieving a mask number of the front surface of the card corresponding to the XY coordinates (card coordinates) specified by the touch by the fingertip or the like from a mask table; and

a step for referring to an instruction table based on the mask number of the front surface of the card and executing an instruction of an application allocated for the front surface of the card,

wherein, a second optical reading unit comprises:

an optical reading unit;

a storage unit, inside or outside a body of the second optical reading unit, the storage unit storing a correspondence table for relating an application ID on the front surface of the card with a card surface number, a mask table for relating a mask number on XY coordinates with each of the card surface number, an instruction table for relating the mask number with an instruction, and an application program; and

a reading unit control unit for controlling the second optical reading unit and the storage unit,

wherein, when the second optical reading unit captures an image of a dot pattern on the front surface of the card, the reading unit control unit executes a process comprising:

a step for specifying an application program based on an application ID obtained from the captured image;

a step for referring to a mask table based on XY coordinates of the captured image and specifying a mask number allocated for each predetermined region; and

a step for referring to an instruction table based on the mask number and executing an instruction of an application allocated for the front surface of the card.

2. The method for reading a card surface and executing an instruction, according to claim 1, wherein, each of the dot patterns on the front surface and the back surface of the card is made into a pattern with an application ID which specifies an application allocated for the relevant surface, a card surface number which specifies a card surface, XY coordinates (dot coordinates = card coordinates), and a mask number allocated for each predetermined region, wherein, when the reading unit control unit of the second optical reading unit captures an image of the dot pattern on the front surface of the card, the reading unit control unit executes a process comprising:

a step for specifying an application program based on an application ID obtained from the captured image; and
a step for directly referring to an instruction table based on the mask number read out from the dot pattern and executing an instruction.

3. A method for reading a card surface and executing an instruction, wherein, dot patterns are formed on a front surface and a back surface of a card, and different applications each allocated to the front and back surfaces of the card can be executed,
wherein, each of the dot patterns on the front surface and the back surface of the card is made into a pattern with an application ID which is allocated to the relevant surface and specifies an application of the other surface by inverting at least any one of bits or flags, a card number which specifies a card, and XY coordinates (dot coordinates = card coordinates), and
a stage chassis comprises:

an optical reading unit mounted inside the chassis as a first optical reading unit for imaging the dot pattern on the back surface of the card from underneath a stage surface (inside the chassis) in a condition in which the card is placed on the stage surface provided on top of the stage chassis;
a touch panel unit for detecting a touch position by a finger or the like on the stage surface;
a storage unit for storing a mask table for relating each of the card number of the application ID with a mask number allocated for each predetermined region on XY coordinates, an instruction table for relating the mask number with an instruction, and an application program;
a control unit for controlling the first optical reading unit inside the chassis, the touch panel unit, and the storage unit,
wherein, when the first optical reading unit captures an image of the dot pattern on the back surface of the card, the control unit of the stage chassis executes a process which comprises:
a step for calculating a location and an orientation (an angle) of the card on the stage surface from XY coordinates of the dot pattern on the back surface of the card (dot coordinates = card coordinates) obtained from the captured image;
a step for specifying an application on the other side of the card by inverting at least any one of bits or flags of the application ID on the back surface of the card obtained from the dot pattern of the back surface of the card;
a step for detecting a touch position touched by a fingertip or the like on a touch panel coordinates obtained from the touch panel unit and converting the touch panel coordinates of the touch position into XY coordinates (dot coordinates = card coordinates) obtained from the previous step;
a step for retrieving a mask number of the front surface of the card corresponding to the XY coordinates (dot coordinates = card coordinates) specified by the touch by the fingertip or the like from a mask table; and
a step for referring to an instruction table based on the mask number of the front surface of the card and executing an instruction of an application allocated for the front surface of the card,
wherein, a second optical reading unit comprises:
an optical reading unit;
a storage unit, inside or outside the second optical reading unit, the storage unit storing a mask table for relating each application ID on the front surface of the card with a mask number allocated for each predetermined region on XY coordinates, an instruction table for relating the mask number with an instruction, and an application program; and
a reading unit control unit for controlling the second optical reading unit and the storage unit,
wherein, when the second optical reading unit captures an image of a dot pattern on the front surface of the card, the reading unit control unit executes a process comprising:
a step for specifying an application program based on an application ID obtained from the captured image;
a step for referring to a mask table based on XY coordinates of the captured image and specifying a mask number allocated for each predetermined region; and
a step for referring to an instruction table based on the mask number and executing an instruction of an application allocated for the front surface of the card.

4. The method for reading a card surface and executing an instruction, according to claim 3, wherein, each of the dot patterns on the front surface and the back surface of the card is made into a pattern with an application ID which specifies an application allocated to the relevant surface, a card number which specifies a card or a card surface number which specifies a card surface, XY coordinates (dot coordinates = card coordinates), and a mask number allocated to each predetermined region,
wherein, when the control unit of the second optical reading unit captures an image of the dot pattern on the front surface of the card, the control unit executes a process comprising:

a step for specifying an application program based on an application ID obtained from the captured image; and
a step for directly referring to an instruction table based on the mask number read out from the dot pattern and executing an instruction.

5. A method for reading a card surface and executing an instruction, wherein, dot patterns are formed on a front surface and a back surface of the card, and different applications each allocated to the front and back surfaces of the card can be executed,
wherein, each of the dot patterns on the front surface and the back surface of the card is made into a pattern with XY coordinates (dot coordinates), and
a stage chassis comprises:

an optical reading unit mounted inside the chassis as a first optical reading unit for imaging the dot pattern on the back surface of the card from underneath a stage surface (inside the chassis) in a condition in which the card is placed on the stage surface provided on top of the stage chassis;
a touch panel unit for detecting a touch position by a fingertip or the like on the stage surface;
a storage unit for storing a correspondence table for relating respective smallest value and greatest value of XY coordinates of the front and back surfaces of the card, an application ID of the front and back surfaces of the card, and the card surface number the front and back surfaces of the card, a mask table for relating each of the card surface number with a mask number allocated for each predetermined region on XY coordinates, an instruction table for relating the mask number with an instruction, and an application program; and
a control unit for controlling the first optical reading unit, the touch panel unit, and the storage unit,
wherein, when the first optical reading unit captures an image of the dot pattern on the back surface of the card, the control unit of the stage chassis executes a process which comprises:

a step for calculating a location and an orientation (an angle) of the card on the stage surface from XY coordinates of the dot pattern on the back surface of the card (dot coordinates) obtained from the captured image;

a step for referring to the correspondence table based on the XY coordinates of the back surface of the card obtained from the dot pattern on the back surface of the card, and retrieving an application ID and a card surface number of the front surface of the card;

a step for detecting a touch position touched by a fingertip or the like on touch panel coordinates obtained from the touch panel unit and converting the touch panel coordinates of the touch position into X'Y' coordinates of card coordinates having a lower left corner as an origin by deleting the smallest value of the XY coordinates from the XY coordinates (dot coordinates) obtained from the previous step;

a step for retrieving a mask number of the front surface of the card corresponding to the X'Y' coordinates (card coordinates having the lower left corner as the origin) specified by the touch by the fingertip or the like from a mask table; and

a step for referring to an instruction table based on the mask number of the front surface of the card and executing an instruction of an application allocated for the front surface of the card,

wherein, a second optical reading unit comprises:

an optical reading unit;

a storage unit, inside or outside a body of the second optical reading unit, the storage unit storing a correspondence table for relating a largest value and a smallest value of XY coordinates on the front surface of the card, an application ID, and a card surface number, a mask table for relating a mask number allocated to each predetermined region on XY coordinates with each card surface number, an instruction table for relating the mask number with an instruction, and an application program; and

a reading unit control unit for controlling the second optical reading unit and the storage unit,

wherein, when the second optical reading unit captures an image of a dot pattern on the front surface of the card, the reading unit control unit executes a process comprising:

a step for referring to the correspondence table based on XY coordinates obtained from the captured image and specifying an application ID and an application program;

a step for deleting the smallest value of the XY coordinates from the XY coordinates of the captured image, referring to a mask table which is specified by the card surface number based on the X'Y' coordinates in card coordinates having the lower left corner as an origin, and specifying a mask number; and

a step for referring to an instruction table based on the mask number and executing an instruction.

6. The method for reading a card surface and executing an instruction, according to any one of claims 1 to 5, wherein, when the control unit controlling the first optical reading unit, the touch panel unit, and the storage unit, or the second optical reading unit detects, for an application ID or a card surface number obtained from a dot pattern on the front surface or the back surface of the card, that an application program corresponding to the application ID or tables required to execute the application program do not exist in the control unit or inside or outside a body of the second optical reading unit,

the control unit or the second optical reading unit downloads the application program or the tables from a server connected through a network.

7. A card medium, front and back surfaces of which are superimposed and printed with a first dot pattern and a second dot pattern, respectively, with drawing patterns,

wherein, the first dot pattern is a large dot pattern which is made into a pattern with an application ID which specifies an application allocated for the drawing pattern on the other surface and a card surface number which specifies a card surface, and, by capturing an image of the back surface of the card by a first optical reading unit from inside a chassis, an application ID and a card surface number of the front surface of the card is read out from a dot pattern on the back surface of the card, and a process which is related to the application ID and the card surface number and corresponds to the drawing pattern on the front surface of the card is executed,

wherein, the second dot pattern is a small dot pattern which is made into a pattern with an application ID which specifies an application allocated for each drawing pattern and a card surface number which specifies a card surface, and, by reading the front surface of the card by a second optical reading unit, an application ID and a card surface number allocated for the drawing pattern of the front surface of the card are read out from the dot pattern of the front surface of the card, and a process which is related to the application ID and the card surface number and corresponds to the drawing pattern of the front surface of the card is executed.

8. A stage chassis having the first optical reading unit for capturing an image of a whole back surface of the card medium of claim 7, the stage chassis comprising:

a touch panel unit for detecting a touch position by a fingertip or the like on a stage surface;

a storage unit for storing a correspondence table for relating each application ID of the front and back surfaces of the card with a card surface number, a mask table for relating each of the card surface number with a mask number allocated for each predetermined region on XY coordinates, an instruction table for relating the mask number with an instruction, and an application program;

a control unit for controlling the first optical reading unit, the touch panel unit, and the storage unit,

wherein, the control unit of the stage chassis executes a process comprising:

a step for calculating a position and an orientation of the card from a captured image of the whole back surface of the card medium on the stage surface imaged by the first optical reading unit;

a step for referring to the correspondence table based on an application ID and a card surface number of the back surface of the card obtained from a first dot pattern (a large dot pattern) of the back surface of the card and reading out an application ID and a card surface number of the front surface of the card;

a step for detecting a touch position by a fingertip or the like on touch panel coordinates obtained from the touch panel unit and converting the touch panel coordinates of the touch position into XY coordinates (card coordinates) obtained in the previous step;

a step for reading a mask number of the front surface of the card corresponding to the XY coordinates (card coordinates) specified by the touch by the fingertip or the like from the mask table; and

a step for referring to the instruction table based on the mask number of the front surface of the card and executing an instruction of an application allocated for the front surface of the card.

9. The stage chassis according to claim 8, wherein, the first optical reading unit recognizes only the first dot pattern (a large dot pattern) while capturing an image of the whole back surface of the stage.

10. The stage chassis according to claim 8, wherein, the control unit extracts only the first large dot pattern from the captured image obtained from the first optical reading unit and converts into a code value corresponding to the dot pattern.

11. The method for reading a card surface and executing an instruction, wherein, each of the second dot patterns (small dot patterns) of the front surface and the back surface of the card medium of claim 7 is made into a pattern with an application ID which specifies an application allocated for each surface, a card surface number which specifies a card surface, and a mask number allocated for each predetermined region,

wherein, when the reading unit control unit of the second optical reading unit captures an image of a dot pattern on the front surface of the card, the reading unit control unit executes a process comprising:

a step for specifying an application program based on an application ID obtained from the captured image; and

a step for directly referring to an instruction table based on the mask number read out from the dot pattern and executing an instruction.

12. The method for reading a card surface and executing an instruction, wherein each of the second dot patterns (small dot patterns) of the front surface and the back surface of the card medium of claim 7 is made into a pattern with an application ID which specifies an application allocated for each surface, a card surface number which specifies a card surface, XY coordinates (dot coordinates = card coordinates), and a mask number allocated for each predetermined region,

wherein, when the reading unit control unit of the second optical reading unit captures an image of a dot pattern of the front surface of the card, the reading unit control unit executes a process comprising:

a step for specifying an application program based on an application ID obtained from the captured image; and

a step for directly referring to an instruction table based on the mask number read out from the dot pattern and executing an instruction.

13. The method for reading a card surface and executing an instruction, wherein each of the second dot patterns (small dot patterns) of the front surface and the back surface of the card medium of claim 7 is made into a pattern with an application ID which specifies an application allocated for each surface, a card surface number which specifies a card surface, and XY coordinates (dot coordinates = card coordinates),

wherein, when the reading unit control unit of the second optical reading unit captures an image of a dot pattern of the front surface of the card, the reading unit control unit executes a process comprising:

a step for specifying an application program based on an application ID obtained from the captured image;

a step for referring to the mask table and specifying a mask number allocated for each predetermined region; and

a step for referring an instruction table based on the mask number and executing an instruction.

14. The method for reading a card surface and executing an instruction, wherein each of the second dot patterns (small dot patterns) of the front surface and the back surface of the card medium of claim 7 is made into a pattern with XY coordinates (dot coordinates),
wherein, when the reading unit control unit of the second optical reading unit captures an image of a dot pattern of the front surface of the card, the reading unit control unit executes a process comprising:

a step for referring to the correspondence table based on the XY coordinates obtained from the captured image and specifying an application ID and an application program;
a step for deleting a smallest value of the XY coordinates from XY coordinates of the captured image to obtain X'Y' coordinates of the card coordinates having a lower left corner as an origin and referring to a mask table specified by the card surface number based on the X'Y' coordinates and specifying a mask number allocated for each predetermined region; and
a step for referring to an instruction table based on the mask number and executing an instruction.

FRONT SURFACE OF CARD

**PRODUCT DETAILS WEB CARD**

MASK REGIONS

ZOOM OUT
ZOOM IN

BACK

FOR WARD

UP

DOWN

END

LEFT RIGHT

SCROLL

y

x

(0,0)

BACK SURFACE OF CARD

**PRODUCT PURCHASE CARD**

MASK REGIONS

SHOPPING CART

+

—

END

DELETE ALL

DECIDE PURCHASING

YES

NO

y

x

(0,0)

FIG.1

DISPLAY DEVICE

COMPUTER
BODY

IMAGING
OPENING

CARD

TOUCH PANEL

TOUCH PANEL
CHASSIS

CAMERA          IRLED

# FIG.2

LIGHT RECEIVING
ELEMENTS
(RECEPTION UNITS)

FINGERTIP

LIGHT EMITTING ELEMENTS
(INFRARED IRRADIATION ELEMENTS)

FIG. 3

RETROREFLECTIVE
SURFACE

PERIPHERAL
WALL

TOUCH
PANEL

Ⅲ

Ⅱ

FINGERTIP

IMAGING
OPENING

(X, Y)

CARD

TOUCH
PANEL
SURFACE

α

β

Ⅳ

Ⅰ

INFRARED IRRADIATION
ELEMENT

CAMERA A

NOTCH

CAMERA B

INFRARED IRRADIATION
ELEMENT

FIG. 4A

F1

Ⅱ

Ⅲ

Ⅳ

CAMERA A

Ⅰ

Ⅱ

Ⅲ

CAMERA B

F2

FIG. 4B

FIG.5

PEN-SHAPED
SCANNER

CARD

FIG.6

FIG.7

FIG.8A

FIG.8B

FIG.9A

FIG.9B

FIG.10

00100001

FIG.11A

00100001

FIG.11B

00100001

FIG.11C

| $I_3$ | $I_4$ | $I_5$ |
|-------|-------|-------|
| $I_2$ | $I_1$ | $I_6$ |

2 × 3

FIG.12A

| $I_3$ | $I_4$ | $I_5$ |
|-------|-------|-------|
| $I_2$ | $I_1$ | $I_6$ |
| $I_9$ | $I_8$ | $I_7$ |

3 × 3

FIG.12B

| $I_5$ | $I_6$ | $I_7$ |
|--------|--------|--------|
| $I_4$ | $I_1$ | $I_8$ |
| $I_3$ | $I_2$ | $I_9$ |
| $I_{12}$ | $I_{11}$ | $I_{10}$ |

3 × 4

FIG.12C

| $I_{36}$ | $I_{17}$ | $I_{18}$ | $I_{19}$ | $I_{20}$ | $I_{21}$ |
|----------|----------|----------|----------|----------|----------|
| $I_{35}$ | $I_{16}$ | $I_5$ | $I_6$ | $I_7$ | $I_{22}$ |
| $I_{34}$ | $I_{15}$ | $I_4$ | $I_1$ | $I_8$ | $I_{23}$ |
| $I_{33}$ | $I_{14}$ | $I_3$ | $I_2$ | $I_9$ | $I_{24}$ |
| $I_{32}$ | $I_{13}$ | $I_{12}$ | $I_{11}$ | $I_{10}$ | $I_{25}$ |
| $I_{31}$ | $I_{30}$ | $I_{29}$ | $I_{28}$ | $I_{27}$ | $I_{26}$ |

6 × 6

FIG.12D

48f
48c
48h
3
48a
48d
48g
48b
48e
48i

FIG.13A

3
3
48d
48g
48e

FIG.13B

| $C_{31}$ | $C_{30}$ | $C_{29}$ | $C_{28}$ | $C_{27}$ | $C_{26}$ | $C_{25}$ | $C_{24}$ | $C_{23}$ | $C_{22}$ | $C_{21}$ | $C_{20}$ | $C_{19}$ | $C_{18}$ | $C_{17}$ | $C_{16}$ | $C_{15}$ | $C_{14}$ | $C_{13}$ | $C_{12}$ | $C_{11}$ | $C_{10}$ | $C_9$ | $C_8$ | $C_7$ | $C_6$ | $C_5$ | $C_4$ | $C_3$ | $C_2$ | $C_1$ | $C_0$ |
|---|---|---|---|---|---|---|---|---|---|---|---|---|---|---|---|---|---|---|---|---|---|---|---|---|---|---|---|---|---|---|---|
| PARITY | | APPLICATION ID | | | | | | CARD SURFACE NUMBER | | | | | | | | Y COODINATE | | | | | | | | X COORDINATE | | | | | | | |

## FIG.14A

FIG.14B

EP 2 177 975 A1

FRONT AND BACK SURFACE
CORRESPONDENCE TABLE

| | FOR TOUCH PANEL CHASSIS (FOR INPUT) | | FOR PEN-SHAPED SCANNER (FOR EXECUTION) | |
|---|---|---|---|---|
| | APPLICATION ID | CARD SURFACE NUMBER | APPLICATION ID | CARD SURFACE NUMBER |
| FRONT SURFACE OF CARD | 2 | 2 | 1 | 1 |
| | | | | |
| BACK SURFACE OF CARD | 1 | 1 | 2 | 2 |
| | | | | |

FIG.15

EP 2 177 975 A1

APPLICATION ID– CARD SURFACE NUMBER–
MASK PATTERN NUMBER CORRESPONDENCE TABLE

| APPLICATION ID | CARD SURFACE NUMBER | MASK PATTERN NUMBER |
|---|---|---|
| 1 | 1 | 1 |
|  | 2 | 2 |
|  | | |
| 2 | 1 | 1 |
|  | 2 | 4 |
|  | | |
|  | | |

FIG.16

37

MASK PATTERN NUMBER- COORDINATE VALUE-
MASK NUMBER CORRESPONDENCE TABLE

| MASK PATTERN NUMBER | COORDINATE VALUE- MASK NUMBER CORRESPONDENCE TABLE | | | | | | | | | | | | |
|---|---|---|---|---|---|---|---|---|---|---|---|---|---|

**MASK PATTERN NUMBER 1**

| | 0 | 1 | 2 | 3 | 4 | 5 | 6 | 7 | 8 | 9 | 10 | 11 | 12 |
|---|---|---|---|---|---|---|---|---|---|---|---|---|---|
| . | | | | | 5 | 5 | | 6 | 6 | | | | |
| 12 | | | | 5 | 5 | 5 | | 6 | 6 | 6 | | | |
| 11 | | | 5 | 5 | 5 | 5 | | 6 | 6 | 6 | 6 | | |
| 10 | | | | 5 | 5 | 5 | | 6 | 6 | 6 | | | |
| 9 | | | | | 5 | 5 | | 6 | 6 | | | | |
| 8 | | | | | | 5 | | 6 | | | | | |
| 7 | | | | | | | | | | | | | |
| 6 | | | | | | | | | | | | | |
| 5 | | | | 12 | 12 | 12 | 12 | 12 | 12 | 12 | | | |
| 4 | | | | 12 | 12 | 12 | 12 | 12 | 12 | 12 | | | |
| 3 | | | | 12 | 12 | 12 | 12 | 12 | 12 | 12 | | | |
| 2 | | | | 12 | 12 | 12 | 12 | 12 | 12 | 12 | | | |
| 1 | | | | | | | | | | | | | |
| 0 | | | | | | | | | | | | | |

**MASK PATTERN NUMBER 2**

| | 0 | 1 | 2 | 3 | 4 | 5 | 6 | 7 | 8 | 9 | 10 | 11 | 12 |
|---|---|---|---|---|---|---|---|---|---|---|---|---|---|
| . | | | | | | | | | | | | | |
| 12 | | | | | | | | | | | | | |
| 11 | | | | | | | | | | | | | |
| 10 | | | 1 | 1 | 1 | 1 | | | 2 | 2 | 2 | 2 | |
| 9 | | | 1 | 1 | 1 | 1 | | | 2 | 2 | 2 | 2 | |
| 8 | | | 1 | 1 | 1 | 1 | | | 2 | 2 | 2 | 2 | |
| 7 | | | 1 | 1 | 1 | 1 | | | 2 | 2 | 2 | 2 | |
| 6 | | | | | | | | | | | | | |
| 5 | | | | | | | | | | | | | |
| 4 | | | 3 | 3 | 3 | 3 | | | 4 | 4 | 4 | 4 | |
| 3 | | | 3 | 3 | 3 | 3 | | | 4 | 4 | 4 | 4 | |
| 2 | | | 3 | 3 | 3 | 3 | | | 4 | 4 | 4 | 4 | |
| 1 | | | 3 | 3 | 3 | 3 | | | 4 | 4 | 4 | 4 | |
| 0 | | | | | | | | | | | | | |

**MASK PATTERN NUMBER 3**

| | 0 | 1 | 2 | 3 | 4 | 5 | 6 | 7 | 8 | 9 | 10 | 11 | 12 |
|---|---|---|---|---|---|---|---|---|---|---|---|---|---|
| . | | | | | | | | | | | | | |
| 12 | | | | | | | | | | | | | |
| 11 | | | | | | | | | | | | | |
| 10 | | | | | | | | | 8 | 8 | 8 | 8 | 8 |
| 9 | | | | | 7 | | | | 8 | 8 | 8 | 8 | 8 |
| 8 | | | | 7 | 7 | 7 | | | 8 | 8 | 8 | 8 | 8 |
| 7 | | | 7 | 7 | 7 | 7 | | | 8 | 8 | 8 | 8 | 8 |
| 6 | | | 7 | 7 | 7 | 7 | | | 8 | 8 | 8 | 8 | 8 |
| 5 | | | 7 | 7 | 7 | 7 | | | 8 | 8 | 8 | 8 | 8 |
| 4 | | | | | | | | | | | | | |
| 3 | | | | | | | | | | | | | |
| 2 | | | | | | | | | | | | | |
| 1 | | | | | | | | | | | | | |
| 0 | | | | | | | | | | | | | |

FIG.17

38

COORDINATE VALUE-
MASK NUMBER CORRESPONDENCE TABLE

| ⋮ | | | | | 5 | 5 | | 6 | 6 | | | | | |
|---|---|---|---|---|---|---|---|---|---|---|---|---|---|---|
| 12 | | | | 5 | 5 | 5 | | 6 | 6 | 6 | | | | |
| 11 | | | 5 | 5 | 5 | 5 | | 6 | 6 | 6 | 6 | | | |
| 10 | | | | 5 | 5 | 5 | | 6 | 6 | 6 | | | | |
| 9 | | | | | 5 | 5 | | 6 | 6 | | | | | |
| 8 | | | | | | 5 | | 6 | | | | | | |
| 7 | | | | | | | | | | | | | | |
| 6 | | | | | | | | | | | | | | |
| 5 | | | | 12 | 12 | 12 | 12 | 12 | 12 | 12 | | | | |
| 4 | | | | 12 | 12 | 12 | 12 | 12 | 12 | 12 | | | | |
| 3 | | | | 12 | 12 | 12 | 12 | 12 | 12 | 12 | | | | |
| 2 | | | | 12 | 12 | 12 | 12 | 12 | 12 | 12 | | | | |
| 1 | | | | | | | | | | | | | | |
| 0 | | | | | | | | | | | | | | |
| Y / X | 0 | 1 | 2 | 3 | 4 | 5 | 6 | 7 | 8 | 9 | 10 | 11 | 12 | --- |

FIG.18

MASK NUMBER- ADDRESS- INSTRUCTION CORRESPONDENCE TABLE

| MASK NUMBER | ADDRESS | INSTRUCTION |
|---|---|---|
| 1 | www.ABC.co.jp | CONNECT TO WEB |
| 2 | www.DEF.co.jp | STREAMING DELIVERY |
| ⟩ | ⟩ | ⟩ |
| 12 | c¥XX.exe | DISCONNECT FROM WEB |
| ⟩ | ⟩ | ⟩ |

FIG.19

TOUCH PANEL
SURFACE

ORIENTATION OF
SENSOR (Y AXIS)

$\theta$

y

(0,0)

x

TOUCH POSITION
Xt, Yt(TOUCH PANEL
COORDINATE SYSTEM)
xt, yt(CARD
COORDINATE SYSTEM)

CENTER OF IMAGING AREA
(CENTER OF SENSOR)

APPLICATION ID, CARD NUMBER
CENTER OF IMAGING AREA xc,yc
(CARD COORDINATE SYSTEM)

CENTER OF IMAGING AREA Xc,Yc
(TOUCH PANEL COORDINATE SYSTEM)

Y

(0,0)    X

## FIG.20A

COORDINATES OF TOUCH PANEL POSITION
IN CARD COORDINATE SYSTEM

$$\begin{Bmatrix} x_t \\ y_t \end{Bmatrix} = \begin{Bmatrix} x_c \\ y_c \end{Bmatrix} + \begin{Bmatrix} \cos\theta & \sin\theta \\ -\sin\theta & \cos\theta \end{Bmatrix} \begin{Bmatrix} X_t - X_c \\ Y_t - Y_c \end{Bmatrix}$$

## FIG.20B

EP 2 177 975 A1

CARD

(FRONT)

**EMPLOYEE**

TARO YOSHIDA

FIG.21A

CARD

(BACK)

**TIME CARD**

| ATTEN-DANCE | CHECK IN | CKECK OUT |
|---|---|---|
| OUT FOR OFFICIAL BUSINESS | OUT | BACK |
| OUT FOR PRIVATE BUSINESS | OUT | BACK |

| YES | NO |
|---|---|

FIG.21B

41

| APPLICATION ID | CARD NUMBER OR CARD SURFACE NUMBER | MASK PATTERN NUMBER | ADDRESS OR INSTRUCTION | | |
|---|---|---|---|---|---|
| 1 (PERSONAL INFORMATION MANAGEMENT APPLICATION) | 10 (USER A - FRONT SURFACE) | 1 | 1 | www.··· | ACCESS TO WEB |
| | 20 (USER B - FRONT SURFACE) | 1 | 1 | www.··· | ACCESS TO WEB |
| | 11 (USER A - BACK SURFACE) | 2 | | | |

FIG.22

## MASK PATTERN NUMBER– COORDINATE VALUE– MASK NUMBER CORRESPONDENCE TABLE

| MASK PATTERN NUMBER | COORDINATE VALUE– MASK NUMBER CORRESPONDENCE TABLE | | | | | | | | | | | | | |

**Mask Pattern Number 1**

| | 0 | 1 | 2 | 3 | 4 | 5 | 6 | 7 | 8 | 9 | 10 | 11 | 12 | .. |
|---|---|---|---|---|---|---|---|---|---|---|---|---|---|---|
| · | | | | 1 | 1 | 1 | 1 | 1 | 1 | 1 | | | | |
| 12 | | | | 1 | 1 | 1 | 1 | 1 | 1 | 1 | | | | |
| 11 | | | | 1 | 1 | 1 | 1 | 1 | 1 | 1 | | | | |
| 10 | | | | 1 | 1 | 1 | 1 | 1 | 1 | 1 | | | | |
| 9 | | | | 1 | 1 | 1 | 1 | 1 | 1 | 1 | | | | |
| 8 | | | | 1 | 1 | 1 | 1 | 1 | 1 | 1 | | | | |
| 7 | | | | 1 | 1 | 1 | 1 | 1 | 1 | 1 | | | | |
| 6 | | | | 1 | 1 | 1 | 1 | 1 | 1 | 1 | | | | |
| 5 | | | | 1 | 1 | 1 | 1 | 1 | 1 | 1 | | | | |
| 4 | | | | | | | | | | | | | | |
| 3 | | | | | | | | | | | | | | |
| 2 | | | | | | | | | | | | | | |
| 1 | | | | | | | | | | | | | | |
| 0 | | | | | | | | | | | | | | |

**Mask Pattern Number 2**

| | 0 | 1 | 2 | 3 | 4 | 5 | 6 | 7 | 8 | 9 | 10 | 11 | 12 | .. |
|---|---|---|---|---|---|---|---|---|---|---|---|---|---|---|
| · | | | | | | | | | | | | | | |
| 12 | | | | | | | | | | | | | | |
| 11 | | | | | | 7 | 7 | 7 | 7 | | 8 | 8 | 8 | 8 |
| 10 | | | | | | 7 | 7 | 7 | 7 | | 8 | 8 | 8 | 8 |
| 9 | | | | | | | | | | | | | | |
| 8 | | | | | | 5 | 5 | 5 | 5 | | 6 | 6 | 6 | 6 |
| 7 | | | | | | 5 | 5 | 5 | 5 | | 6 | 6 | 6 | 6 |
| 6 | | | | | | | | | | | | | | |
| 5 | | | | | | | | | | | | | | |
| 4 | | | | | | | | | | | | | | |
| 3 | | | 3 | 3 | 3 | 3 | 3 | 3 | | 4 | 4 | 4 | 4 | 4 |
| 2 | | | 3 | 3 | 3 | 3 | 3 | 3 | | 4 | 4 | 4 | 4 | 4 |
| 1 | | | 3 | 3 | 3 | 3 | 3 | 3 | | 4 | 4 | 4 | 4 | 4 |
| 0 | | | | | | | | | | | | | | |

FIG.23

MASK REGION

| C31 | C30 | C29 | C28 | C27 | C26 | C25 | C24 | C23 | C22 | C21 | C20 | C19 | C18 | C17 | C16 | C15 | C14 | C13 | C12 | C11 | C10 | C9 | C8 | C7 | C6 | C5 | C4 | C3 | C2 | C1 | C0 |
|---|---|---|---|---|---|---|---|---|---|---|---|---|---|---|---|---|---|---|---|---|---|---|---|---|---|---|---|---|---|---|---|
| PARITY | | CODE1 | | | | | | CODE2 | | | | CODE3 | | | | Y COORDINATE | | | | | | | | X COORDINATE | | | | | | | |
| | | APPLICATION ID | | | | | | CARD SURFACE NUMBER | | | | MASK NUMBER | | | | | | | | | | | | | | | | | | | |

FIG.24A

REGION OTHER THAN MASK REGION

| C31 | C30 | C29 | C28 | C27 | C26 | C25 | C24 | C23 | C22 | C21 | C20 | C19 | C18 | C17 | C16 | C15 | C14 | C13 | C12 | C11 | C10 | C9 | C8 | C7 | C6 | C5 | C4 | C3 | C2 | C1 | C0 |
|---|---|---|---|---|---|---|---|---|---|---|---|---|---|---|---|---|---|---|---|---|---|---|---|---|---|---|---|---|---|---|---|
| PARITY | | CODE1 | | | | | | | | CODE2 | | | | | | Y COORDINATE | | | | | | | | X COORDINATE | | | | | | | |
| | | APPLICATION ID | | | | | | | | CARD SURFACE NUMBER | | | | | | | | | | | | | | | | | | | | | |

FIG.24B

44

MASK NUMBER- ADDRESS- INSTRUCTION CORRESPONDENCE TABLE
(WHEN MASK NUMBER IS INCLUDED IN DOT CODE)

| MASK NUMBER | ADDRESS | INSTRUCTION |
|---|---|---|
| 0001 (DECIMAL NUMBER:1) | www.ABC.co.jp | CONNECT TO WEB |
| 0010 (DECIMAL NUMBER:2) | www.DEF.co.jp | STREAMING DELIVERY |
| 〜 | 〜 | 〜 |
| 1100 (DECIMAL NUMBER:12) | c¥XX.exe | DISCONNECT FROM WEB |
| 〜 | 〜 | 〜 |

FIG.25

EP 2 177 975 A1

WHEN MASK NUMBER IS INCLUDED

| $C_{31}$ | $C_{30}$ | $C_{29}$ | $C_{28}$ | $C_{27}$ | $C_{26}$ | $C_{25}$ | $C_{24}$ | $C_{23}$ | $C_{22}$ | $C_{21}$ | $C_{20}$ | $C_{19}$ | $C_{18}$ | $C_{17}$ | $C_{16}$ | $C_{15}$ | $C_{14}$ | $C_{13}$ | $C_{12}$ | $C_{11}$ | $C_{10}$ | $C_9$ | $C_8$ | $C_7$ | $C_6$ | $C_5$ | $C_4$ | $C_3$ | $C_2$ | $C_1$ | $C_0$ |
|---|---|---|---|---|---|---|---|---|---|---|---|---|---|---|---|---|---|---|---|---|---|---|---|---|---|---|---|---|---|---|---|
| PARITY | | CODE1 | | | | | | CODE2 | | | | CODE3 | | | | Y COORDINATE | | | | | | | | X COORDINATE | | | | | | | |

APPLICATION ID    CARD NUMBER   MASK NUMBER

# FIG.26A

WHEN MASK NUMBER IS NOT INCLUDED

| $C_{31}$ | $C_{30}$ | $C_{29}$ | $C_{28}$ | $C_{27}$ | $C_{26}$ | $C_{25}$ | $C_{24}$ | $C_{23}$ | $C_{22}$ | $C_{21}$ | $C_{20}$ | $C_{19}$ | $C_{18}$ | $C_{17}$ | $C_{16}$ | $C_{15}$ | $C_{14}$ | $C_{13}$ | $C_{12}$ | $C_{11}$ | $C_{10}$ | $C_9$ | $C_8$ | $C_7$ | $C_6$ | $C_5$ | $C_4$ | $C_3$ | $C_2$ | $C_1$ | $C_0$ |
|---|---|---|---|---|---|---|---|---|---|---|---|---|---|---|---|---|---|---|---|---|---|---|---|---|---|---|---|---|---|---|---|
| PARITY | | CODE1 | | | | | | CODE2 | | | | | | | | Y COORDINATE | | | | | | | | X COORDINATE | | | | | | | |

APPLICATION ID              CARD NUMBER

CODE1 = CODE0 + 0 ⇒ APPLICATION ID PRINTED ON FRONT SURFACE
CODE1 = CODE0 + 1 ⇒ APPLICATION ID PRINTED ON BACK SURFACE

# FIG.26B

MASK NUMBER

MASK NUMBER

LAST BIT OF APPLICATION ID

10100001 0001

10100001 0010

CARD    MASK NUMBER
NUMBER  (NOT ALLOCATED)

FRONT
SURFACE   101⓪ 0001  0000

LAST BIT OF APPLICATION ID
CARD
NUMBER

BACK SURFACE  101① 0001  · · · ·

MASK NUMBER

**FIG.27**

CODE READING METHOD BY TOUCH PANEL CHASSIS FOR READING FRONT AND BACK SURFACES OF CARD, WHEN THE SAME APPLICATIONS ARE INDICATED ON THE FRONT AND BACK SURFACES

| READING SURFACE | READING CODE | APPLICATION ID | CARD SURFACE NUMBER |
|---|---|---|---|
| BACK | 101①0001 | 101 | 00001 |
| FRONT | 101⓪0001 | 101 | 10001 |

# FIG.28A

CODE READING METHOD BY TOUCH PANEL CHASSIS FOR READING FRONT AND BACK SURFACES OF CARD, WHEN DIFFERENT APPLICATIONS ARE INDICATED ON THE FRONT AND BACK SURFACES

| READING SURFACE | READING CODE | APPLICATION ID | CARD SURFACE NUMBER |
|---|---|---|---|
| BACK | 101①0001 | 1010 | 0001 |
| FRONT | 101⓪0001 | 1011 | 0001 |

# FIG.28B

| $C_{31}$ | $C_{30}$ | $C_{29}$ | $C_{28}$ | $C_{27}$ | $C_{26}$ | $C_{25}$ | $C_{24}$ | $C_{23}$ | $C_{22}$ | $C_{21}$ | $C_{20}$ | $C_{19}$ | $C_{18}$ | $C_{17}$ | $C_{16}$ | $C_{15}$ | $C_{14}$ | $C_{13}$ | $C_{12}$ | $C_{11}$ | $C_{10}$ | $C_9$ | $C_8$ | $C_7$ | $C_6$ | $C_5$ | $C_4$ | $C_3$ | $C_2$ | $C_1$ | $C_0$ |
|---|---|---|---|---|---|---|---|---|---|---|---|---|---|---|---|---|---|---|---|---|---|---|---|---|---|---|---|---|---|---|---|
| PARITY | | Y COORDINATE | | | | | | | | | | | | | | | X COORDINATE | | | | | | | | | | | | | | |

FIG.29

(800, 899)     (899, 899)

BACK
SURFACE
OF CARD

PRODUCT
PURCHASE CARD

(800, 750)   y'

(0, 0)   x'

(899, 750)

(600, 649)     (699, 649)

PRODUCT DETAILS
WEB CARD

FRONT
SURFACE
OF CARD

y'

(0, 0)
x'

(600, 500)     (699, 500)

y

(0, 0)   x

FIG.30

FRONT AND BACK SURFACE CORRESPONDENCE TABLE

| | X COORDINATE | | Y COORDINATE | | FOR TOUCH PANEL CHASSIS (FOR INPUT) | | FOR PEN-SHAPED SCANNER (FOR EXECUTION) | |
|---|---|---|---|---|---|---|---|---|
| | SMALLEST VALUE | GREATEST VALUE | SMALLEST VALUE | GREATEST VALUE | APPLICA-TION ID | CARD SURFACE NUMBER | APPLICA-TION ID | CARD SURFACE NUMBER |
| FRONT SURFACE OF CARD | 600 | 699 | 500 | 649 | 2 | 2 | 1 | 1 |
| BACK SURFACE OF CARD | 800 | 899 | 750 | 899 | 1 | 1 | 2 | 2 |

FIG.31

51

TOUCH PANEL
SURFACE

$\theta$

y'

(0,0)

x'

TOUCH POSITION
Xt, Yt(TOUCH PANEL
COORDINATE SYSTEM)
x't, y't(CARD
COORDINATE SYSTEM)

CENTER OF IMAGING AREA
Xc,Yc (TOUCH PANEL COORDINATE SYSTEM)
x'c,y'c (CARD COORDINATE SYSTEM)

Y

(0,0)　　　　X

**FIG.32A**

COORDINATES OF TOUCH PANEL POSITION
IN CARD COORDINATE SYSTEM

$$\begin{Bmatrix} x_t' \\ y_t' \end{Bmatrix} = \begin{Bmatrix} x'_c \\ y'_c \end{Bmatrix} + \begin{bmatrix} \cos\theta & \sin\theta \\ -\sin\theta & \cos\theta \end{bmatrix} \begin{Bmatrix} X_t - X_c \\ Y_t - Y_c \end{Bmatrix}$$

**FIG.32B**

DOT CODE MANAGEMENT TABLE

| DOT CODE | CONTENT ADDRESS |
|----------|-----------------|
| 85001 | C¥····· |
| 85002 | www.····· |

## FIG.33A

TOUCH PANEL
CHASSIS

DOT CODE
MANAGEMENT
SERVER

SERVER
A

SERVER
B

SERVER
C

## FIG.33B

DISPLAY

TOUCH PANEL
(STAGE SURFACE)

CARD

TOUCH PANEL
CHASSIS

# FIG.34

CARD

IRLED (IRRADIATE LOWER SURFACE OF STAGE)

STAGE SURFACE    REFLECTOR

CAMERA

## FIG.35A

FINGERTIP

TRANSMITTING UNIT    RECEPTION UNIT

CARD

IRLED    IRLED

REFLECTOR    CAMERA    REFLECTOR

## FIG.35B

LARGE DOTS

SMALL DOTS

CARD

FIG.36A

SMALL DOTS

LARGE DOTS

FIG.36B

FIG.37

4

4

$C_{1-0}$    $C_{7-6}$    $C_{13-12}$

$C_{3-2}$    $C_{9-8}$    $C_{15-14}$

$C_{5-4}$    $C_{11-10}$    $C_{17-16}$

FIG.38

| $C_{17}$ | $C_{16}$ | $C_{15}$ | $C_{14}$ | $C_{13}$ | $C_{12}$ | $C_{11}$ | $C_{10}$ | $C_9$ | $C_8$ | $C_7$ | $C_6$ | $C_5$ | $C_4$ | $C_3$ | $C_2$ | $C_1$ | $C_0$ |
|---|---|---|---|---|---|---|---|---|---|---|---|---|---|---|---|---|---|
| PARITY | | APPLICATION ID | | | | | | | | | | CARD SURFACE NUMBER | | | | | |

FIG.39

EP 2 177 975 A1

FIG.40A

FIG.40B

FIG.41A

FIG.41B

TOUCH PANEL SURFACE

$\theta$

H

y

x

W

TOUCH POSITION
Xt, Yt(TOUCH PANEL
COORDINATE SYSTEM)
xt, yt(CARD
COORDINATE SYSTEM)

CENTER OF CARD Xc,Yc
(TOUCH PANEL COORDINATE SYSTEM)

Y

X

## FIG.42A

COORDINATES OF TOUCH PANEL POSITION
IN CARD COORDINATE SYSTEM

$$\begin{Bmatrix} x_t \\ y_t \end{Bmatrix} = \begin{Bmatrix} \dfrac{W}{2} \\ \dfrac{H}{2} \end{Bmatrix} + \begin{Bmatrix} \cos\theta & \sin\theta \\ -\sin\theta & \cos\theta \end{Bmatrix} \begin{Bmatrix} X_t - X_c \\ Y_t - Y_c \end{Bmatrix}$$

## FIG.42B

FIG.43

PORTABLE GAME
MACHINE

PEN-SHAPED
SCANNER

CARD

FIG.44

| INTERNATIONAL SEARCH REPORT | International application No. |
|---|---|
| | PCT/JP2008/061784 |

**A. CLASSIFICATION OF SUBJECT MATTER**
*G06F3/042*(2006.01)i, *G06F3/041*(2006.01)i, *H04N1/00*(2006.01)i, *H04N1/04*(2006.01)i

According to International Patent Classification (IPC) or to both national classification and IPC

**B. FIELDS SEARCHED**

Minimum documentation searched (classification system followed by classification symbols)
G06F3/03, 3/041-3/047, A63F9/24, 13/00-13/12, G06K7/00-7/14, H04N1/00, 1/04

| Documentation searched other than minimum documentation to the extent that such documents are included in the fields searched | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2007-50225 A  (Aruze Corp.),<br>01 March, 2007 (01.03.07),<br>Full text; all drawings<br>(Family: none) | 1-14 |
| A | JP 2004-260341 A  (Ricoh Co., Ltd.),<br>16 September, 2004 (16.09.04),<br>Full text; all drawings<br>(Family: none) | 1-14 |
| A | JP 2006-75362 A  (Omron Corp.),<br>23 March, 2006 (23.03.06),<br>Full text; all drawings<br>(Family: none) | 1-14 |

☐ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 August, 2008 (18.08.08) | 26 August, 2008 (26.08.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**EP 2 177 975 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006239593 A